# EUROPEAN PATENT APPLICATION

(11) **EP 4 503 383 A1**
(43) Date of publication of application: **05.02.2025**
(21) Application number: 22939935.7
(22) Date of filing: 09.12.2022
(51) Int. Cl.: H02J 50/10

(54) **CHARGING MODULE, ELECTRONIC DEVICE AND CHARGER**

(30) Priority: 25.04.2022 CN 202210440717
(71) Applicant: Huawei Digital Power Technologies Co., Ltd., Shenzhen, Guangdong 518043 (CN)
(72) Inventor: LI, Yuechao, Shenzhen, Guangdong 518129 (CN); WANG, Chao, Shenzhen, Guangdong 518129 (CN); WU, Baoshan, Shenzhen, Guangdong 518129 (CN); LI, Changyuan, Shenzhen, Guangdong 518129 (CN)
(74) Representative: Maiwald GmbH
(86) International application number: PCT/CN2022/137875
(87) International publication number: WO 2023/207122

(57) **Abstract**

This application provides a wireless charging module, an electronic device, and a charger. The wireless charging module includes a charging coil and a magnetic attachment apparatus. A magnetic attachment apparatus includes a plurality of magnetic attachment units, each magnetic attachment unit includes a first assembly and a second assembly, and the first assembly and the second assembly are disposed on a same surface in a first direction. The first assembly includes a plurality of magnets, and magnetic field directions of the plurality of magnets are parallel and opposite to each other, so that lateral magnetic fields cancel each other out, to weaken a magnetic field radiated around or to an inside by the magnetic attachment apparatus. Therefore, a soft magnetic material can be omitted or reduced, and miniaturization of the charger or the electronic device is facilitated. An enhancement in magnetic field strength on a side of the magnetic attachment apparatus leads to an enhancement in a magnetic adsorption force between the electronic device and the charger, to better limit a location of contact between the electronic device and the charger, help match a charging coil of the electronic device and a charging coil of the charger, and help improve user experience when the electronic device and the charger perform wireless charging.

## Description

This application claims priority to Chinese Patent Application No. 202210440717.2, filed with the China National Intellectual Property Administration on April 25, 2022 and entitled "CHARGING MODULE, ELECTRONIC DEVICE, AND CHARGER", which is incorporated herein by reference in its entirety.

### TECHNICAL FIELD

The present invention relates to the field of charging technologies, and in particular, to a charging module, an electronic device, and a charger.

### BACKGROUND

In an existing wireless charging technology, an electronic device and a charger may adsorb each other through a magnet, and wireless charging is implemented through electromagnetic induction between the electronic device and a charging coil of the charger. However, a magnetic field of the magnet affects normal operation of another magnetic field sensitive component inside the electronic device and the charger. Consequently, performance of the electronic device and the charger is affected.

### SUMMARY

To resolve the foregoing problem, embodiments of this application provide a charging module and an electronic device and a charger to which the charging module is applied. The charging module includes a charging coil and a magnetic attachment apparatus. When magnetic field strength around or on an inside of the magnetic attachment apparatus is weakened, impact of the magnetic attachment apparatus on another magnetic sensitive component in the charger or the electronic device can be reduced. Therefore, a soft magnetic material can be omitted or reduced, and miniaturization of the charger or the electronic device is facilitated. An enhancement in magnetic field strength on a side of the magnetic attachment apparatus leads to an enhancement in a magnetic adsorption force between the electronic device and the charger, to better limit a location of contact between the electronic device and the charger, help match a charging coil of the electronic device and a charging coil of the charger, and help improve user experience when the electronic device and the charger perform wireless charging.

According to a first aspect, this application provides a charging module, including a charging coil and a magnetic attachment apparatus. The charging coil is configured to receive or send electric energy, and the magnetic attachment apparatus is disposed on an inside or an outside of the charging coil. The magnetic attachment apparatus includes at least one magnetic attachment unit, the magnetic attachment unit includes a first assembly and a second assembly, and the first assembly and the second assembly are disposed next to each other in a first direction; the first assembly includes a plurality of magnets, the plurality of magnets in the first assembly are stacked in a second direction, and internal magnetic field directions of at least two magnets in the first assembly are opposite; the second assembly includes at least one magnet, and internal magnetic field directions of magnets in the second assembly are the same; and the first direction is parallel to a plane of the charging coil or the magnetic attachment apparatus, and the second direction is perpendicular to the plane of the charging coil or the magnetic attachment apparatus.

In an embodiment, the charging coil, the first assembly of the magnetic attachment unit, and the second assembly of the magnetic attachment unit are sequentially arranged next to each other in the first direction.

In an embodiment, the internal magnetic field directions of the at least two magnets in the first assembly are parallel to one of the first direction and the second direction, and the internal magnetic field direction of the magnet in the second assembly is parallel to the other one of the first direction and the second direction.

In an embodiment, magnetization patterns of the at least two magnets in the first assembly are different from a magnetization pattern of the magnet in the second assembly.

In an embodiment, the at least two magnets in the first assembly include a first magnet and a second magnet, a magnetization pattern of the first magnet is the same as a magnetization pattern of the second magnet, and an internal magnetic field direction of the first magnet is opposite to an internal magnetic field direction of the second magnet.

In an embodiment, the first assembly further includes a filling material, the filling material and the at least two magnets in the first assembly are stacked in the second direction, the filling material is disposed between the at least two magnets in the first assembly, and the filling material includes one or more of an isolating assembly or a magnet.

In an embodiment, one or more magnets in one or more of the first assembly or the second assembly are formed by splicing a plurality of magnet submodules disposed next to each other.

In an embodiment, a shape of a top-view cross-section of the magnet in the first assembly is an annular sector or a polygon, and a shape of a top-view cross-section of the magnet in the second assembly is an annular sector or a polygon; and the magnetization patterns of the at least two magnets in the first assembly are one of axial magnetization and radial magnetization, and the magnetization pattern of the magnet in the second assembly is the other one of axial magnetization and radial magnetization; or the magnetization patterns of the at least two magnets in the first assembly are one of axial magnetization and diametrical magnetization, and the magnetization pattern of the magnet in the second assembly is the other one of axial magnetization and diametrical magnetization.

In an embodiment, the magnetic attachment apparatus includes a plurality of magnetic attachment units, a shape of a top-view cross-section of each magnetic attachment unit is an annular sector or a polygon, and the plurality of magnetic attachment units are sequentially disposed next to each other at a neighboring location of the charging coil, to form an annulus or an annular sector.

In an embodiment, the magnetic attachment apparatus includes a plurality of magnetic attachment units, a shape of a top-view cross-section of each magnetic attachment unit is an annular sector or a polygon, and each magnetic attachment unit is separately disposed at a neighboring location of the charging coil.

In an embodiment, the magnetic attachment apparatus includes a plurality of groups of magnetic attachment units, each group of magnetic attachment units includes one magnetic attachment unit or a plurality of magnetic attachment units sequentially arranged next to each other, and each group of magnetic attachment units is separately disposed at a neighboring location of the charging coil.

In an embodiment, the magnetic attachment apparatus includes one magnetic attachment unit, and a shape of a top-view cross-section of the magnetic attachment unit is a circle, an annulus, or a polygon.

In an embodiment, a shape of a top-view cross-section of the magnet in the first assembly is an annulus or an annular sector, a shape of a top-view cross-section of the magnet in the second assembly is an annulus, a circle, or a polygon, the magnetization patterns of the at least two magnets in the first assembly are one of axial magnetization and radial magnetization, and the magnetization pattern of the magnet in the second assembly is the other one of axial magnetization and radial magnetization.

According to a second aspect, this application provides a charging module, including a charging coil and a magnetic attachment apparatus. The charging coil is configured to receive or send electric energy, and the magnetic attachment apparatus is disposed on an inside or an outside of the charging coil. The magnetic attachment apparatus includes at least one magnetic attachment unit, the magnetic attachment unit includes a first assembly and a second assembly, and the first assembly and the second assembly are disposed next to each other in a first direction; the first assembly includes a plurality of magnets, the plurality of magnets in the first assembly are stacked in the first direction, and internal magnetic field directions of at least two magnets in the first assembly are opposite; the second assembly includes at least one magnet, and internal magnetic field directions of magnets in the second assembly are the same; and the first direction is perpendicular to a plane of the charging coil or the magnetic attachment apparatus.

According to a third aspect, this application provides an electronic device, including a power module and the foregoing charging module. A charging coil of the charging module is electrically connected to the power module, and the charging coil of the charging module is configured to receive electric energy sent by a charging coil of a charger; and a magnetic attachment apparatus is configured to limit a location of contact between the electronic device and the charger, so that the charging coil of the charger matches a charging coil of the electronic device.

According to a fourth aspect, this application provides a charger, including a power module and the foregoing charging module. A charging coil of the charging module is electrically connected to the power module, and the charging coil of the charging module is configured to send electric energy to a charging coil of an electronic device; and a magnetic attachment apparatus is configured to limit a location of contact between the charger and the electronic device, so that the charging coil of the charger matches the charging coil of the electronic device.

### BRIEF DESCRIPTION OF DRAWINGS

The following briefly describes the accompanying drawings that need to be used in the descriptions of embodiments or the conventional technology.
FIG. 1 is a schematic diagram of a structure of an electronic device and a charger of the electronic device in the conventional technology;
FIG. 2(a) is a schematic diagram of a magnet according to an embodiment of this application;
FIG. 2(b) is a schematic diagram of another magnet according to an embodiment of this application;
FIG. 2(c) is a schematic diagram of another magnet according to an embodiment of this application;
FIG. 2(d) is a schematic diagram of another magnet according to an embodiment of this application;
FIG. 3(a) is a schematic diagram of a top-view cross-section of a charging module according to an embodiment of this application;
FIG. 3(b) is a schematic diagram of a top-view cross-section of another charging module according to an embodiment of this application;
FIG. 3(c) is a schematic diagram of a top-view cross-section of another charging module according to an embodiment of this application;
FIG. 3(d) is a schematic diagram of an internal magnetic field direction of a magnet in a magnetic attachment apparatus of a charging module according to an embodiment of this application;
FIG. 3(e) is a schematic diagram of an internal magnetic field direction of a magnet in a magnetic attachment apparatus of another charging module according to an embodiment of this application;
FIG. 3(f) is a schematic diagram of an internal magnetic field direction of a magnet in a magnetic attachment apparatus of another charging module according to an embodiment of this application;
FIG. 4 is a schematic diagram of a structure of an electronic device and a charger of the electronic device according to an embodiment of this application;
FIG. 5(a) is a schematic diagram of a structure of a magnetic attachment apparatus according to an embodiment of this application;
FIG. 5(b) is a schematic diagram of a magnetic field of a magnet of a magnetic attachment apparatus according to an embodiment of this application;
FIG. 5(c) is a schematic diagram of a magnetic field of a magnet of a magnetic attachment apparatus according to an embodiment of this application;
FIG. 6 is a schematic diagram of a structure of another electronic device and a charger of the electronic device according to an embodiment of this application;
FIG. 7(a) is a schematic diagram of a structure of another magnetic attachment apparatus according to an embodiment of this application;
FIG. 7(b) is a schematic diagram of a magnetic field of a magnet of another magnetic attachment apparatus according to an embodiment of this application;
FIG. 8(a) is a schematic diagram of a structure of another magnetic attachment apparatus according to an embodiment of this application;
FIG. 8(b) is a schematic diagram of a magnetic field of a magnet of a first magnetic attachment apparatus according to an embodiment of this application;
FIG. 8(c) is a schematic diagram of a magnetic field of a magnet of a second magnetic attachment apparatus according to an embodiment of this application;
FIG. 9(a) is a schematic diagram of a structure of another magnetic attachment apparatus according to an embodiment of this application;
FIG. 9(b) is a schematic diagram of a magnetic field of a magnet of a first magnetic attachment apparatus according to an embodiment of this application;
FIG. 9(c) is a schematic diagram of a magnetic field of a magnet of a second magnetic attachment apparatus according to an embodiment of this application;
FIG. 10(a) is a schematic diagram of a structure of another magnetic attachment apparatus according to an embodiment of this application;
FIG. 10(b) is a schematic diagram of a magnetic field of a magnet of a first magnetic attachment apparatus according to an embodiment of this application;
FIG. 10(c) is a schematic diagram of a magnetic field of a magnet of a second magnetic attachment apparatus according to an embodiment of this application;
FIG. 10(d) is a schematic diagram of a structure of another electronic device and a charger of the electronic device according to an embodiment of this application;
FIG. 11(a) is a schematic diagram of a structure of another magnetic attachment apparatus according to an embodiment of this application;
FIG. 11(b) is a schematic diagram of a magnetic field of a magnet of a first magnetic attachment apparatus according to an embodiment of this application;
FIG. 11(c) is a schematic diagram of a magnetic field of a magnet of a second magnetic attachment apparatus according to an embodiment of this application;
FIG. 12(a) is a schematic diagram of a structure of another magnetic attachment apparatus according to an embodiment of this application;
FIG. 12(b) is a schematic diagram of a magnetic field of a magnet of a first magnetic attachment apparatus according to an embodiment of this application;
FIG. 12(c) is a schematic diagram of a magnetic field of a magnet of a second magnetic attachment apparatus according to an embodiment of this application;
FIG. 12(d) is a schematic diagram of a magnetic field of a magnet of a third magnetic attachment apparatus according to an embodiment of this application;
FIG. 12(e) is a schematic diagram of a magnetic field of a magnet of a fourth magnetic attachment apparatus according to an embodiment of this application;
FIG. 13 is a schematic diagram of a structure of a magnetic attachment apparatus according to an embodiment of this application;
FIG. 14 is a schematic diagram of a structure of another magnetic attachment apparatus according to an embodiment of this application;
FIG. 15 is a schematic diagram of a structure of another magnetic attachment apparatus according to an embodiment of this application; and
FIG. 16 is a schematic diagram of a structure of a magnet of a magnetic attachment apparatus according to an embodiment of this application.

### DESCRIPTION OF EMBODIMENTS

The following describes the technical solutions in embodiments of this application with reference to the accompanying drawings in embodiments of this application.

In descriptions of this application, locations or location relationships indicated by terms such as "center", "up", "down", "in front of", "behind", "left", "right", "vertical", "horizontal", "top", "bottom", "inside", and "outside" are based on locations or location relationships shown in the accompanying drawings, and are merely intended for ease of describing this application and simplifying descriptions, instead of indicating or implying that a mentioned apparatus or component needs to be disposed at a specific location or constructed and operated at a specific location, and therefore shall not be understood as limitations on this application.

In the descriptions of this application, it should be noted that, unless otherwise clearly specified and limited, terms "mount", "link", and "connect" should be understood in a broad sense, for example, may mean a fixed connection, may be a detachable connection, or may be a butt joint connection or an integrated connection. A person of ordinary skill in the art can understand specific meanings of the foregoing terms in this application based on specific cases.

In descriptions of this specification, specific features, structures, materials, or characteristics may be combined in a proper manner in any one or more of embodiments or examples.

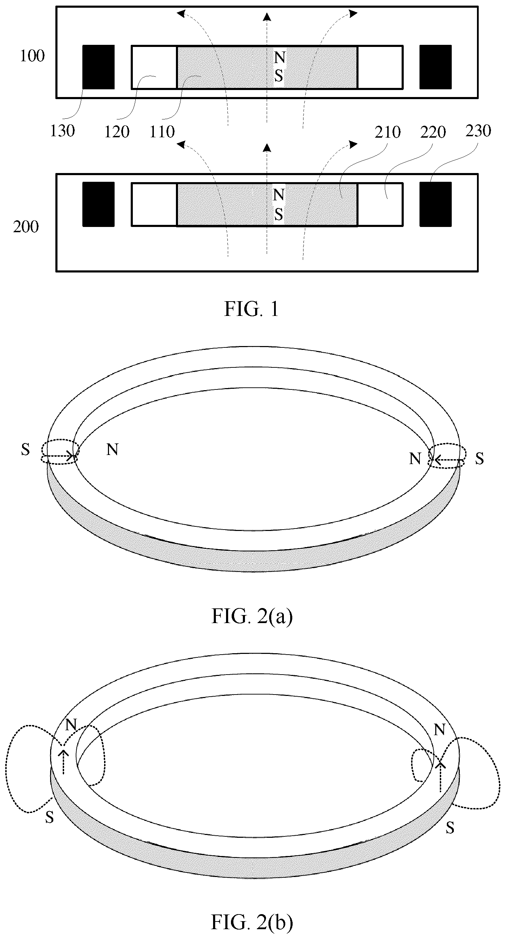

FIG. 1 is a schematic diagram of a structure of an electronic device and a charger of the electronic device in the conventional technology. As shown in FIG. 1, a charger 200 is horizontally placed on a desktop, an electronic device 100 is stacked on the charger 200, and wireless charging may be performed after a charging coil 230 of the electronic device 100 matches a charging coil 130 of the charger 200. The electronic device 100 includes a magnet 110, a soft magnetic material 120, and the charging coil 130. The soft magnetic material 120 wraps around the magnet 110, and the charging coil 130 is sleeved around the soft magnetic material 120. The charger 200 includes a magnet 210, a soft magnetic material 220, and a charging coil 230. The soft magnetic material 220 wraps around the magnet 210, and the charging coil 230 is sleeved around the soft magnetic material 220.

In an existing electronic device or charger, a soft magnetic material wraps around a magnet, and the soft magnetic material shields a magnetic field radiated around by the magnet, to reduce impact of the magnet on a magnetic field sensitive component in the electronic device or the charger, for example, reduce impact of the magnet on a magnetic core on a back of a charging coil in the electronic device or the charger. However, a magnetic shielding capability of the soft magnetic material is limited, and impact of the magnetic field of the magnet on the magnetic field sensitive component cannot be eliminated. In addition, the soft magnetic material needs to occupy internal space of the electronic device or the charger. This is not conducive to miniaturization of the electronic device or the charger.

To resolve a problem existing in an existing wireless charging technology, an embodiment of this application provides a charging module and an electronic device and a charger to which the charging module is applied.

In this embodiment of this application, magnetization patterns of magnets include radial magnetization, axial magnetization, and diametrical magnetization. Based on different magnetization patterns of the magnets, the magnets include a radially-magnetized magnet, an axially-magnetized magnet, and a diametrically-magnetized magnet. In this embodiment of this application, "internal magnetic field direction of a magnet" is a direction pointing from an S pole to an N pole inside the magnet.

For example, FIG. 2(a) shows an annular radially-magnetized magnet. The annular radially-magnetized magnet is horizontally placed on a plane, an internal magnetic field direction of the annular radially-magnetized magnet is approximately parallel to the plane, and the internal magnetic field direction of the annular radially-magnetized magnet points from an outside to a center. In another embodiment, the internal magnetic field direction of the annular radially-magnetized magnet may point from a center to an outside.

For example, FIG. 2(b) shows an annular axially-magnetized magnet. The annular axially-magnetized magnet is horizontally placed on a plane, an internal magnetic field direction of the annular axially-magnetized magnet is approximately perpendicular to the plane, and the internal magnetic field direction of the annular axially-magnetized magnet points from a lower side to an upper side. In another embodiment, the internal magnetic field direction of the annular axially-magnetized magnet may point from an upper side to a lower side.

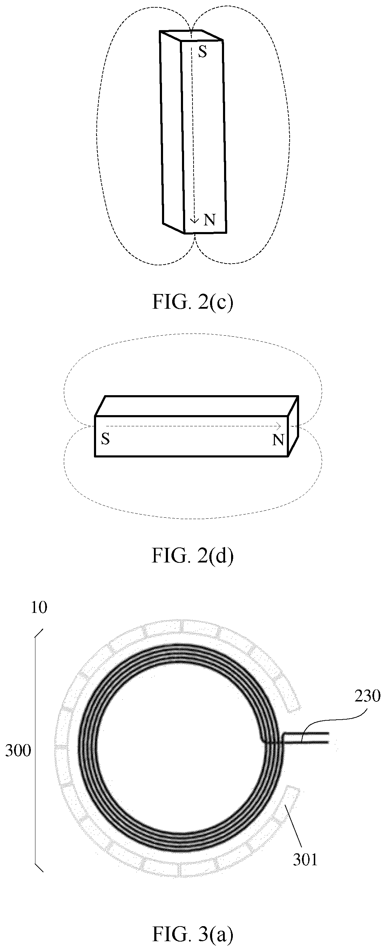

For example, FIG. 2(c) shows a rectangular axially-magnetized magnet. The rectangular axially-magnetized magnet is horizontally placed on a plane, an internal magnetic field direction of the rectangular axially-magnetized magnet is approximately perpendicular to the plane, and the internal magnetic field direction of the rectangular axially-magnetized magnet points from an upper side to a lower side. In another embodiment, the internal magnetic field direction of the rectangular axially-magnetized magnet may point from a lower side to an upper side.

For example, FIG. 2(d) shows a rectangular diametrically-magnetized magnet. The rectangular diametrically-magnetized magnet is horizontally placed on a plane, an internal magnetic field direction of the rectangular diametrically-magnetized magnet is approximately parallel to the plane, and the internal magnetic field direction of the rectangular diametrically-magnetized magnet points from a left side to a right side. In another embodiment, the internal magnetic field direction of the rectangular diametrically-magnetized magnet may be any direction approximately parallel to the plane, for example, pointing from a right side to a left side, pointing from a front side to a back side, or pointing from a back side to a front side.

In this embodiment of this application, "radial dimension of a magnet" is a distance between a center of a magnetic attachment apparatus in a shape of a circle, an annulus, an annular sector, a polygon and an inner edge or an outer edge. In this embodiment of this application, the polygon includes a triangle, a rectangle, or another polygon, the annulus includes a circular annulus, a multilateral annulus, or another irregular annulus, and the annular sector may also be referred to as an arc. "Surface" may be a substrate that is used to carry the magnetic attachment apparatus and that is in the electronic device or the charger, may be a housing of the electronic device or the charger, or may be a substrate that is used to carry a charging coil and that is in the electronic device or the charger. In this embodiment of this application, the surface may be a plane or a curved surface. In this embodiment of this application, the substrate may be a circuit board, a soft magnetic material, or a mechanical part. In this embodiment of this application, "parallel" includes that an included angle between two planes, between two directions, or between a direction and a plane is approximately 0 degrees. "Opposite" includes that an included angle between two directions is approximately 180 degrees. "Perpendicular" includes that an included angle between two directions, between a direction and a plane, or between planes is approximately 90 degrees. "Upward" is a direction pointing from a charger 200 to an electronic device 100 during wireless charging. "Downward" indicates a direction opposite to "upward". During wireless charging, one side that is of the electronic device 100 and that is close to the charger 200 is a lower side of the electronic device 100, and the other side of the electronic device 100 is an upper side of the electronic device 100. During wireless charging, one side that is of the charger 200 and that is close to the electronic device 100 is an upper side of the charger 200, and the other side of the charger 200 is a lower side of the charger 200.

The charging module provided in this embodiment of this application includes the charging coil and the magnetic attachment apparatus. The charging coil is configured to receive or send electric energy, and the magnetic attachment apparatus is disposed on an inside or an outside of the charging coil. The magnetic attachment apparatus includes at least one magnetic attachment unit. The magnetic attachment unit includes a first assembly and a second assembly, and the first assembly and the second assembly are disposed next to each other in a first direction. The first assembly includes a plurality of magnets, and internal magnetic field directions of at least two magnets in the first assembly are opposite. The second assembly includes at least one magnet, and internal magnetic field directions of magnets in the second assembly are the same. The plurality of magnets in the first assembly are stacked in a second direction. The first direction is a direction parallel to a plane of the charging coil or the magnetic attachment apparatus, and the second direction is a direction perpendicular to the plane of the charging coil or the magnetic attachment apparatus. In other words, the first direction is perpendicular to the second direction.

In the charging module provided in this embodiment of this application, when magnetic field strength around or on an inside of the magnetic attachment apparatus is weakened, impact of the magnetic attachment apparatus on another magnetic sensitive component in the charger or the electronic device can be reduced. Therefore, a soft magnetic material can be omitted or reduced, and miniaturization of the charger or the electronic device is facilitated. In the charging module provided in this embodiment of this application, an enhancement in magnetic field strength on a side of the magnetic attachment apparatus leads to an enhancement in a magnetic adsorption force between the electronic device and the charger, to better limit a location of contact between the electronic device and the charger, help match a charging coil of the electronic device and a charging coil of the charger, and help improve user experience when the electronic device and the charger perform wireless charging.

In this embodiment of this application, the charging coil, the first assembly of the magnetic attachment unit, and the second assembly of the magnetic attachment unit are sequentially arranged in the first direction.

The magnetic attachment apparatus provided in this embodiment of this application includes at least one magnetic attachment unit. The magnetic attachment unit includes a first assembly and a second assembly. The first assembly and the second assembly are disposed next to each other in a first direction. The first assembly includes a plurality of magnets, and internal magnetic field directions of at least two magnets in the first assembly are opposite. The second assembly includes at least one magnet, and internal magnetic field directions of magnets in the second assembly are the same. The plurality of magnets in the first assembly are stacked in a second direction. The first direction is a direction parallel to a plane of the magnetic attachment apparatus, and the second direction is a direction perpendicular to the plane of the magnetic attachment apparatus.

In this embodiment of this application, a magnetization pattern and an internal magnetic field direction of a magnet in the magnetic attachment unit may be combined in a plurality of manners. The magnetization pattern of the magnet may include radial magnetization, axial magnetization, or diametrical magnetization. The internal magnetic field direction of the magnet may include the first direction or the second direction. The first direction is the direction parallel to the plane of the magnetic attachment apparatus, and the second direction is the direction perpendicular to the plane of the magnetic attachment apparatus.

In this embodiment of this application, the magnetic attachment unit includes a first assembly and a second assembly. The first assembly includes a plurality of magnets. The second assembly includes at least one magnet. Internal magnetic field directions of at least two magnets in the first assembly are parallel to one of a first direction and a second direction, and an internal magnetic field direction of the magnet in the second assembly is parallel to the other one of the first direction and the second direction.

In this embodiment of this application, the magnetic attachment unit includes a first assembly and a second assembly. The first assembly includes a plurality of magnets. The second assembly includes at least one magnet. A magnetization pattern of each of at least two magnets in the first assembly is different from a magnetization pattern of the magnet in the second assembly.

In this embodiment of this application, the first assembly of the magnetic attachment unit includes a first magnet and a second magnet, a magnetization pattern of the first magnet is the same as a magnetization pattern of the second magnet, and an internal magnetic field direction of the first magnet is opposite to an internal magnetic field direction of the second magnet. In this embodiment of this application, the first assembly of the magnetic attachment unit further includes a filling material, the filling material and the at least two magnets in the first assembly are stacked in the second direction, the filling material is disposed between the at least two magnets in the first assembly, and the filling material includes one or more of an isolating assembly or a magnet.

In this embodiment of this application, the magnet may be a single complete magnet. In this embodiment of this application, the magnet may alternatively be formed by splicing a plurality of magnet submodules. Adjacent magnet submodules may be in contact with each other, or may have a gap or a filling material. In this embodiment of this application, a material of the magnet or the magnet submodule may include one or more of a neodymium ferrite magnet, a neodymium magnet, or another magnetic material.

In this embodiment of this application, one or more magnets in one or more of the first assembly or the second assembly are formed by splicing a plurality of magnet submodules disposed next to each other. In this embodiment of this application, a quantity of magnetic attachment units in the magnetic attachment apparatus and a shape of a top-view cross-section of the magnetic attachment unit may be combined in a plurality of manners. The magnetization pattern and a shape of a top-view cross-section of the magnet in the magnetic attachment unit may be combined in a plurality of manners. The magnetization pattern of the magnet may include radial magnetization, axial magnetization, or diametrical magnetization. The shape of the top-view cross-section of the magnetic attachment unit or the magnet in the magnetic attachment unit may include a circle, an annulus, a polygon, or another irregular shape.

In this embodiment of this application, a shape of a top-view cross-section of the magnet in the first assembly of the magnetic attachment unit is an annular sector or a polygon, and a shape of a top-view cross-section of a magnet in the second assembly is an annular sector or a polygon. The magnetization patterns of the at least two magnets in the first assembly are one of axial magnetization and radial magnetization, and the magnetization pattern of the magnet in the second assembly is the other one of axial magnetization and radial magnetization; or the magnetization patterns of the at least two magnets in the first assembly are one of axial magnetization and diametrical magnetization, and the magnetization pattern of the magnet in the second assembly is the other one of axial magnetization and diametrical magnetization.

In this embodiment of this application, the magnetic attachment apparatus includes the magnetic attachment unit, the shape of the top-view cross-section of each magnetic attachment unit is an annular sector or a polygon, and a plurality of magnetic attachment units are sequentially disposed next to each other at a neighboring location of the charging coil, to form an annulus or an annular sector.

In this embodiment of this application, the magnetic attachment apparatus includes a plurality of magnetic attachment units, a shape of a top-view cross-section of each magnetic attachment unit is an annular sector or a polygon, and each magnetic attachment unit is separately disposed at a neighboring location of the charging coil. There is a same interval between any two magnetic attachment units.

In this embodiment of this application, the magnetic attachment apparatus includes a plurality of magnetic attachment units, the plurality of magnetic attachment units are grouped into a plurality of groups of magnetic attachment units, any group of magnetic attachment units includes one magnetic attachment unit or a plurality of magnetic attachment units sequentially arranged next to each other, and the plurality of groups of magnetic attachment units each are separately disposed at a neighboring location of the charging coil. There is a same interval between any two groups of magnetic attachment units.

In this embodiment of this application, the magnetic attachment apparatus includes one magnetic attachment unit, and a shape of a top-view cross-section of the magnetic attachment unit is a circle, an annulus, or a polygon.

In this embodiment of this application, a shape of a top-view cross-section of the magnet in the first assembly of the magnetic attachment apparatus is an annulus or an annular sector, a shape of a top-view cross-section of the magnet in the second assembly of the magnetic attachment apparatus is an annulus, a circle, or a polygon, the magnetization patterns of the at least two magnets in the first assembly are one of axial magnetization and radial magnetization, and the magnetization pattern of the magnet in the second assembly is the other one of axial magnetization and radial magnetization.

The electronic device provided in this embodiment of this application includes a power module and a charging module. The power module is configured to supply power to the electronic device. The charging module includes a charging coil and the foregoing magnetic attachment apparatus. The charging coil of the charging module is electrically connected to the power module, and the charging coil of the charging module is configured to receive electric energy sent by a charging coil of the charger. The charging module is disposed on an internal lower side of the electronic device. The magnetic attachment apparatus is configured to limit a location of contact between the electronic device and the charger, so that the charging coil of the electronic device matches the charging coil of the charger.

The charger provided in this embodiment of this application includes a power module and a charging module. The charging module includes a charging coil and the foregoing magnetic attachment apparatus. The charging coil of the charging module is electrically connected to the power module. The power module is configured to supply power to the charging coil of the charging module. The charging coil of the charging module is configured to send electric energy to the charging coil of the electronic device. The charging module is disposed on an internal upper side of the charger. The magnetic attachment apparatus is configured to limit the location of contact between the charger and the electronic device, so that the charging coil of the charger matches the charging coil of the electronic device.

In the charging module of the charger or the electronic device provided in this embodiment of this application, when magnetic field strength around or on an inside of the magnetic attachment apparatus is weakened, impact of magnetic attraction on another magnetic sensitive component can be reduced. Therefore, a soft magnetic material can be omitted or reduced, and miniaturization of the charger or the electronic device is facilitated. In the charging module of the charger or the electronic device provided in this embodiment of this application, an enhancement in magnetic field strength on a side of the magnetic attachment apparatus leads to an enhancement in a magnetic adsorption force between the electronic device and the charger, to better limit a location of contact between the electronic device and the charger, help match the charging coil of the electronic device and the charging coil of the charger, and help improve user experience when the electronic device and the charger perform wireless charging.

FIG. 3(a) is a schematic diagram of a charging module according to an embodiment of this application. As shown in FIG. 3(a), a charging module 10 includes a magnetic attachment apparatus 300 and a charging coil 230. The magnetic attachment apparatus 300 includes a plurality of magnetic attachment units 301. A shape of a top-view cross-section of each magnetic attachment unit 301 is an annular sector or a polygon. The plurality of magnetic attachment units 301 are sequentially arranged next to each other at a neighboring location on an outside of the charging coil 230, to form an annular sector or an annulus with a notch. In this embodiment of this application, a shape of a top-view cross-section of the charging coil 230 may include a plurality of shapes such as a circular annulus and an irregular annulus. There may be a same or different interval between each magnetic attachment unit 301 and the charging coil 230. In another embodiment, the plurality of magnetic attachment units 301 are sequentially arranged next to each other at a neighboring location on an inside of the charging coil 230, to form an annular sector or an annulus with a notch. In this embodiment of this application, a shape of a top-view cross-section of the charging coil 230 may include a plurality of shapes such as a circular annulus and an irregular annulus. There may be a same or different interval between each magnetic attachment unit 301 and the charging coil 230. Two adjacent magnetic attachment units 301 may be in contact with each other, or may have a gap or a filling material. The charging coil 230 may be electrically connected to another circuit of a charger 200 through a notch of the magnetic attachment apparatus 300, to facilitate miniaturization of the charger 200. In another embodiment, the magnetic attachment apparatus 210 includes one magnetic attachment unit 301. A shape of a top-view cross-section of the magnetic attachment unit 301 is an annular sector or an annulus with a notch, and is the same as a shape of the magnetic attachment apparatus 300 shown in FIG. 3(a).

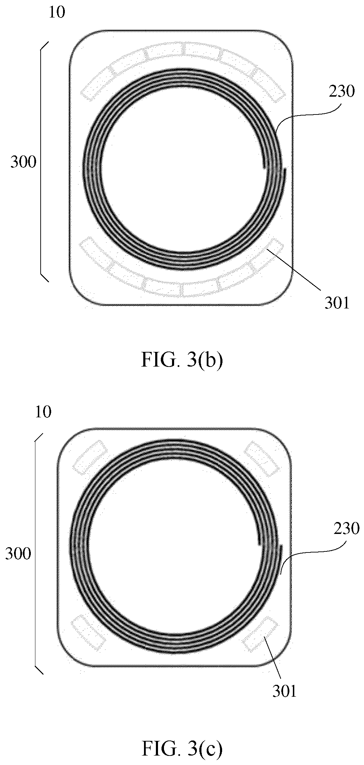

FIG. 3(b) is a schematic diagram of another charging module according to an embodiment of this application. As shown in FIG. 3(b), a charging module 10 includes a magnetic attachment apparatus 300 and a charging coil 230. The magnetic attachment apparatus 300 includes two groups of magnetic attachment units 301. All groups of magnetic attachment units 301 include a same quantity of magnetic attachment units 301. A shape of a top-view cross-section of each magnetic attachment unit 301 is an annular sector or a polygon. A shape of a top-view cross-section of each group of magnetic attachment units 301 is an annular sector or a polygon. A plurality of magnetic attachment units 301 in one group of magnetic attachment units 301 are arranged next to each other, to form one annular sector, and a plurality of magnetic attachment units 301 in the other group of magnetic attachment units 301 are arranged next to each other, to form another annular sector. Two adjacent magnetic attachment units 301 may be in contact with each other, or may have a gap or a filling material. As shown in FIG. 3(b), the two groups of magnetic attachment units 301 may be disposed on an outside of the charging coil 230. In another embodiment, the two groups of magnetic attachment units 301 may be disposed on an inside of the charging coil 230. Each group of magnetic attachment units 301 is separately disposed at a neighboring location of the charging coil 230. In this embodiment of this application, a shape of a top-view cross-section of the charging coil 230 may include a plurality of shapes such as a circular annulus and an irregular annulus. There may be a same or different interval between each group of magnetic attachment units 301 and the charging coil 230.

As shown in FIG. 3(b), two intervals between the two groups of magnetic attachment units 301 are the same, to facilitate mutual cooperation between the two groups of magnetic attachment units 301 in the magnetic attachment apparatus 300. In this embodiment of this application, a quantity of groups of magnetic attachment units 301 in the magnetic attachment apparatus 300 is not limited to only two shown in FIG. 3(b), and may be more than two. There may be a same interval between any two groups of magnetic attachment units 301. In this embodiment of this application, each group of magnetic attachment units 301 may include a different quantity of magnetic attachment units 301. Each group of magnetic attachment units 301 may include a plurality of magnetic attachment units 301 that are arranged next to each other, or may include only a single magnetic attachment unit 301.

FIG. 3(c) is a schematic diagram of another charging module according to an embodiment of this application. As shown in FIG. 3(c), a charging module 10 includes a magnetic attachment apparatus 300 and a charging coil 230. The magnetic attachment apparatus 300 includes a plurality of magnetic attachment units 301. A shape of a top-view cross-section of each magnetic attachment unit 301 is an annular sector or a polygon. The plurality of magnetic attachment units 301 are disposed on an outside of the charging coil, and each magnetic attachment unit 301 is separately disposed at a neighboring location of the charging coil 230. In this embodiment of this application, a shape of a top-view cross-section of the charging coil 230 may include a plurality of shapes such as a circular annulus and an irregular annulus. There may be a same or different interval between each magnetic attachment unit 301 and the charging coil 230.

As shown in FIG. 3(c), there is a same interval between any two magnetic attachment units 301, to facilitate mutual cooperation between two magnetic attachment units 301 in the magnetic attachment apparatus 300. In this embodiment of this application, a quantity of magnetic attachment units 301 is not limited to only four in FIG. 3(c), and may be another quantity. In another embodiment, the plurality of magnetic attachment units 301 may be disposed on an inside of the charging coil, and each magnetic attachment unit 301 is separately disposed at a neighboring location of the charging coil 230. In this embodiment of this application, the shape of the top-view cross-section of the charging coil 230 may include a plurality of shapes such as a circular annulus and an irregular annulus. There may be a same or different interval between each magnetic attachment unit 301 and the charging coil 230.

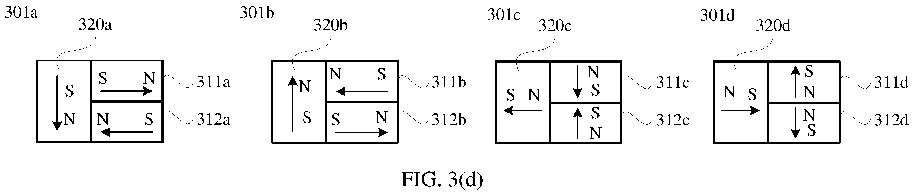

FIG. 3(d) is a schematic diagram of an internal magnetic field direction of a magnet in a magnetic attachment apparatus of a charging module according to an embodiment of this application. As shown in FIG. 3(d), a magnetic attachment unit 301 includes a first assembly and a second assembly, the first assembly includes a first magnet 311 and a second magnet 312, and the second assembly includes a third magnet 320. The first magnet 311 and the third magnet 320 are disposed next to each other in a first direction, and the second magnet 312 and the third magnet 320 are disposed next to each other in the first direction. The first magnet 311 and the second magnet 312 are stacked in a second direction. A shape of a top-view cross-section of the magnetic attachment unit 301 is an annular sector or a polygon. A shape of a top-view cross-section of the first magnet 311, the second magnet 312, and the third magnet 320 is an annular sector or a polygon.

A magnetization pattern of a magnet in the magnetic attachment unit 301 is radial magnetization, diametrical magnetization, and axial magnetization. Optionally, a magnetization pattern of each of the first magnet 311 and the second magnet 312 is radial magnetization or diametrical magnetization, and an internal magnetic field direction of the first magnet 311 and an internal magnetic field direction of the second magnet 312 are opposite. A magnetization pattern of the third magnet 320 is axial magnetization.

In an embodiment, in a magnetic attachment unit 301a shown in FIG. 3(d), an S pole of a first magnet 311a faces a left side, and an N pole faces a right side. An N pole of a second magnet 312a faces the left side and an S pole faces the right side. An S pole of a third magnet 320a faces upward, and an N pole faces downward. A magnetic field direction of the first magnet 311a and a magnetic field direction of the second magnet 312a are parallel and opposite to each other. Magnetic fields radiated to the right side by the first magnet 311a and the second magnet 312a cancel each other out, so that a magnetic field radiated to the right side by the magnetic attachment apparatus 300 is weakened.

In an embodiment, in a magnetic attachment unit 301b shown in FIG. 3(d), an N pole of a first magnet 311b faces a left side, and an S pole faces a right side. An S pole of a second magnet 312b faces the left side, and an N pole faces the right side. An N pole of a third magnet 320b faces upward, and an S pole faces downward. A magnetic field direction of the first magnet 311b and a magnetic field direction of the second magnet 312b are parallel and opposite to each other. Magnetic fields radiated to the right side by the first magnet 311b and the second magnet 312b cancel each other out, so that a magnetic field radiated to the right side by the magnetic attachment apparatus 300 is weakened.

Optionally, a magnetization pattern of each of the first magnet 311 and the second magnet 312 is axial magnetization, and an internal magnetic field direction of the first magnet 311 and an internal magnetic field direction of the second magnet 312 are opposite. A magnetization pattern of the third magnet 320 is radial magnetization or diametrical magnetization.

In an embodiment, in a magnetic attachment unit 301c shown in FIG. 3(d), an N pole of a first magnet 311c faces upward, and an S pole faces downward. An S pole of a second magnet 312c faces upward, and an N pole faces downward. An S pole of a third magnet 320c faces a left side, and an N pole faces a right side. A magnetic field direction of the first magnet 311c and a magnetic field direction of the second magnet 312c are parallel and opposite to each other. Magnetic fields radiated to the right side by the first magnet 311c and the second magnet 312c cancel each other out, so that a magnetic field radiated to the right side by the magnetic attachment apparatus 300 is weakened.

In an embodiment, in a magnetic attachment unit 301d shown in FIG. 3(d), an S pole of a first magnet 311d faces upward, and an N pole faces downward. An N pole of a second magnet 312d faces upward, and an S pole faces downward. An N pole of a third magnet 320d faces a left side, and an S pole faces a right side. A magnetic field direction of the first magnet 311d and a magnetic field direction of the second magnet 312d are parallel and opposite to each other. Magnetic fields radiated to the right side by the first magnet 311d and the second magnet 312d cancel each other out, so that a magnetic field radiated to the right side by the magnetic attachment apparatus 300 is weakened.

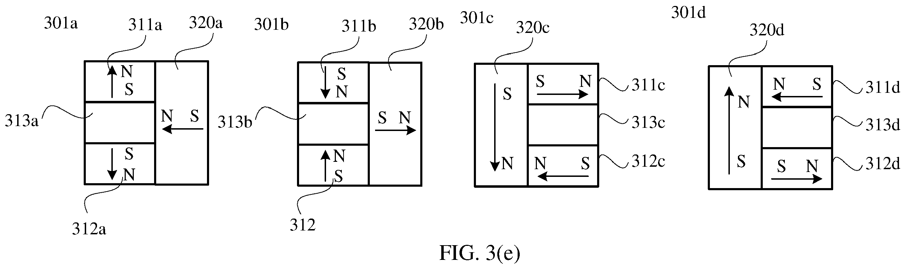

FIG. 3(e) is a schematic diagram of an internal magnetic field direction of a magnet in a magnetic attachment apparatus of another charging module according to an embodiment of this application. As shown in FIG. 3(e), a magnetic attachment unit 301 includes a first assembly and a second assembly, the first assembly includes a first magnet 311, a second magnet 312, and a filling material 313, and the second assembly includes a third magnet 320. The first magnet 311 and the third magnet 320 are disposed next to each other in a first direction, and the second magnet 312 and the third magnet 320 are disposed next to each other in the first direction. The first magnet 311, the second magnet 312, and the filling material 313 are stacked in a second direction. The filling material 313 is located between the first magnet 311 and the second magnet 312. The filling material 313 may include one or more of a magnet, an isolating material, or a gap. In an embodiment, the filling material 313 may include a magnet. In an embodiment, the filling material 313 may include a non-magnetic isolating material, and is filled between the first magnet 311 and the second magnet 312, to reduce volumes of the first magnet 311 and the second magnet 312, and reduce costs of a magnet material. In another embodiment, the filling material 313 may include a gap with a specific volume, to reduce a weight.

A shape of a top-view cross-section of the magnetic attachment unit 301 is an annular sector or a polygon. A shape of a top-view cross-section of the first magnet 311, the second magnet 312, and the third magnet 320 is an annular sector or a polygon. The first magnet 311 is disposed on an upper part of a side surface of the third magnet 320, and a second magnet 312 is disposed on a lower part of the side surface of the third magnet 320, to reduce a magnetic field radiated to a left side or a right side by the magnetic attachment apparatus 300. In addition, when a same magnetic attraction force and a same lateral magnetic field are implemented, a quantity of used magnet materials is reduced, to reduce costs of an electronic device 100 and a charger 200.

A magnetization pattern of a magnet in the magnetic attachment unit 301 is radial magnetization, diametrical magnetization, and axial magnetization. Optionally, a magnetization pattern of each of the first magnet 311 and the second magnet 312 is axial magnetization, and an internal magnetic field direction of the first magnet 311 and an internal magnetic field direction of the second magnet 312 are opposite. A magnetization pattern of the third magnet 320 is radial magnetization or diametrical magnetization. In an embodiment, the filling material 313 may include a radially-magnetized magnet or a diametrically-magnetized magnet.

In an embodiment, in a magnetic attachment unit 301a shown in FIG. 3(e), an N pole of a first magnet 311a faces upward, and an S pole faces downward. An S pole of a second magnet 312a faces upward, and an N pole faces downward. An N pole of a third magnet 320a faces a left side, and an S pole faces a right side. A magnetic field direction of the first magnet 311a and a magnetic field direction of the second magnet 312a are parallel and opposite to each other. Magnetic fields radiated to the left side by the first magnet 311a and the second magnet 312a cancel each other out, so that a magnetic field radiated to the left side by the magnetic attachment apparatus 300 is weakened.

In an embodiment, in a magnetic attachment unit 301b shown in FIG. 3(e), an S pole of a first magnet 311b faces upward, and an N pole faces downward. An N pole of a second magnet 312b faces upward, and an S pole faces downward. An S pole of a third magnet 320b faces a left side, and an N pole faces a right side. A magnetic field direction of the first magnet 311b and a magnetic field direction of the second magnet 312b are parallel and opposite to each other. Magnetic fields radiated to the left side by the first magnet 311b and the second magnet 312b cancel each other out, so that a magnetic field radiated to the left side by the magnetic attachment apparatus 300 is weakened.

Optionally, a magnetization pattern of each of the first magnet 311 and the second magnet 312 is radial magnetization or diametrical magnetization, and an internal magnetic field direction of the first magnet 311 and an internal magnetic field direction of the second magnet 312 are opposite. A magnetization pattern of the third magnet 320 is axial magnetization. In an embodiment, the filling material 313 may include an axially-magnetized magnet.

In an embodiment, in a magnetic attachment unit 301c shown in FIG. 3(e), an S pole of a first magnet 311c faces a left side, and an N pole faces a right side. An N pole of a second magnet 312c faces the left side and an S pole faces the right side. An S pole of a third magnet 320c faces upward, and an N pole faces downward. A magnetic field direction of the first magnet 311c and a magnetic field direction of the second magnet 312c are parallel and opposite to each other. Magnetic fields radiated to the right side by the first magnet 311c and the second magnet 312c cancel each other out, so that a magnetic field radiated to the right side by the magnetic attachment apparatus 300 is weakened.

In an embodiment, in a magnetic attachment unit 301d shown in FIG. 3(e), an N pole of a first magnet 311d faces a left side, and an S pole faces a right side. An S pole of a second magnet 312d faces the left side, and an N pole faces the right side. An N pole of a third magnet 320d faces upward, and an S pole faces downward. A magnetic field direction of the first magnet 311d and a magnetic field direction of the second magnet 312d are parallel and opposite to each other. Magnetic fields radiated to the right side by the first magnet 311d and the second magnet 312d cancel each other out, so that a magnetic field radiated to the right side by the magnetic attachment apparatus 300 is weakened.

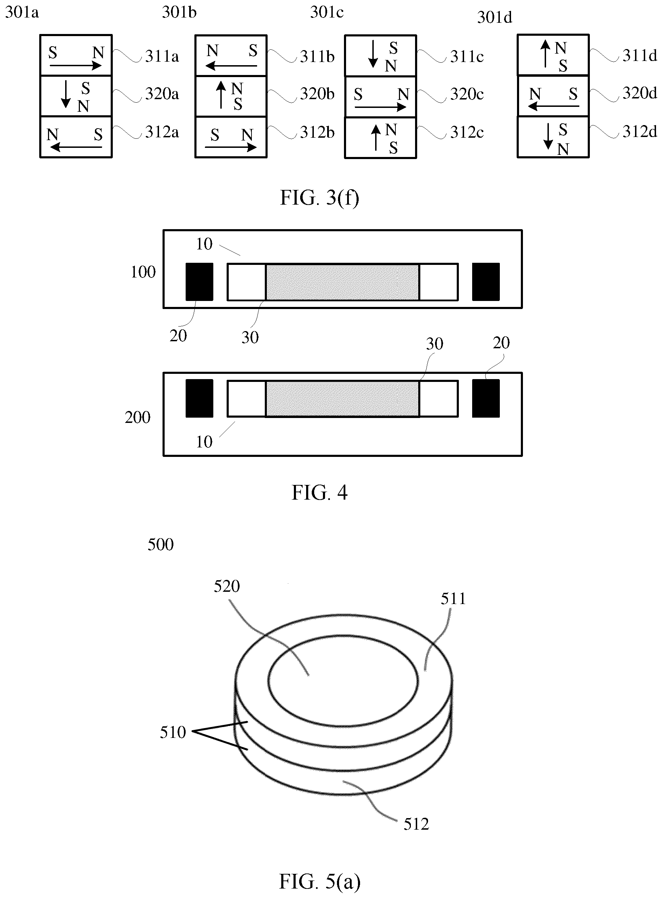

FIG. 3(f) is a schematic diagram of an internal magnetic field direction of a magnet in a magnetic attachment apparatus of another charging module according to an embodiment of this application. As shown in FIG. 3(f), a magnetic attachment unit 301 includes a first assembly and a second assembly, the first assembly includes a first magnet 311 and a second magnet 312, and the second assembly includes a third magnet 320. The first magnet 311, the second magnet 312, and the third magnet 320 are stacked in a second direction. The third magnet 320 is located between the first magnet 311 and the second magnet 312. A shape of a top-view cross-section of the magnetic attachment unit 301 is an annular sector or a polygon. A shape of a top-view cross-section of the first magnet 311, the second magnet 312, and the third magnet 320 is an annular sector or a polygon.

A magnetization pattern of a magnet in the magnetic attachment unit 301 is radial magnetization, diametrical magnetization, and axial magnetization. Optionally, a magnetization pattern of each of the first magnet 311 and the second magnet 312 is axial magnetization, and an internal magnetic field direction of the first magnet 311 and an internal magnetic field direction of the second magnet 312 are opposite. A magnetization pattern of the third magnet 320 is radial magnetization or diametrical magnetization.

In an embodiment, in a magnetic attachment unit 301a shown in FIG. 3(f), an S pole of a first magnet 311a faces a left side, and an N pole faces a right side. An N pole of a second magnet 312a faces the left side and an S pole faces the right side. An S pole of a third magnet 320a faces upward, and an N pole faces downward. A magnetic field direction of the first magnet 311a and a magnetic field direction of the second magnet 312a are parallel and opposite to each other. Magnetic fields radiated to the left side or the right side by the first magnet 311a and the second magnet 312a cancel each other out, so that a magnetic field radiated to the left side or the right side by the magnetic attachment apparatus 300 is weakened.

In an embodiment, in a magnetic attachment unit 301b shown in FIG. 3(f), an N pole of a first magnet 311b faces a left side, and an S pole faces a right side. An S pole of a second magnet 312b faces the left side, and an N pole faces the right side. An N pole of a third magnet 320b faces upward, and an S pole faces downward. A magnetic field direction of the first magnet 311b and a magnetic field direction of the second magnet 312b are parallel and opposite to each other. Magnetic fields radiated to the left side or the right side by the first magnet 311b and the second magnet 312b cancel each other out, so that a magnetic field radiated to the left side or the right side by the magnetic attachment apparatus 300 is weakened.

Optionally, a magnetization pattern of each of the first magnet 311 and the second magnet 312 is radial magnetization or diametrical magnetization, and an internal magnetic field direction of the first magnet 311 and an internal magnetic field direction of the second magnet 312 are opposite. A magnetization pattern of the third magnet 320 is axial magnetization.

In an embodiment, in a magnetic attachment unit 301c shown in FIG. 3(f), an S pole of a first magnet 311c faces upward, and an N pole faces downward. An N pole of a second magnet 312c faces upward, and an S pole faces downward. An S pole of a third magnet 320c faces a left side, and an N pole faces a right side. A magnetic field direction of the first magnet 311c and a magnetic field direction of the second magnet 312c are parallel and opposite to each other. Magnetic fields radiated to the left side or the right side by the first magnet 311c and the second magnet 312c cancel each other out, so that a magnetic field radiated to the left side or the right side by the magnetic attachment apparatus 300 is weakened.

In an embodiment, in a magnetic attachment unit 301d shown in FIG. 3(f), an N pole of a first magnet 311d faces upward, and an S pole faces downward. An S pole of a second magnet 312d faces upward, and an N pole faces downward. An N pole of a third magnet 320d faces a left side, and an S pole faces a right side. A magnetic field direction of the first magnet 311d and a magnetic field direction of the second magnet 312d are parallel and opposite to each other. Magnetic fields radiated to the left side or the right side by the first magnet 311d and the second magnet 312d cancel each other out, so that a magnetic field radiated to the left side or the right side by the magnetic attachment apparatus 300 is weakened.

FIG. 4 is a schematic diagram of a structure of an electronic device 100 and a charger 200 of the electronic device 100 according to an embodiment of this application. The electronic device 100 may be a watch, a mobile phone, a headset, a tablet computer, a computer, or the like. The charger 200 may be a portable charger, a vehicle-mounted charger, or the like. For ease of describing a charging module 10 of the electronic device 100 or the charger 200, other circuits or structures of the electronic device 100 and the charger 200 are omitted in FIG. 4.

As shown in FIG. 4, the electronic device 100 includes a charging module 10. The charging module 10 is disposed on a surface on an internal lower side of the electronic device 100. In an embodiment, the charging module 10 is disposed on an inner surface of a housing on a lower side of the electronic device 100 or a substrate inside the electronic device 100. In other words, a surface may be the inner surface of the housing on the lower side of the electronic device 100 or the substrate inside the electronic device 100. The charging module 10 includes a magnetic attachment apparatus 30 and a charging coil 20. In the electronic device 100, magnetic field strength around the magnetic attachment apparatus 30 is weakened, and magnetic field strength on a lower side of the magnetic attachment apparatus 30 is enhanced.

As shown in FIG. 4, the charger 200 includes a charging module 10. The charging module 10 is disposed on a surface on an internal upper side of the charger 200. In an embodiment, the charging module 10 is disposed on an inner surface of a housing on an upper side of the charger 200 or on a substrate inside the charger 200. In other words, a surface may be the inner surface of the housing on the upper side of the charger 200 or the substrate side the charger 200. The charging module 10 includes a magnetic attachment apparatus 30 and a charging coil 20. In the charger 200, magnetic field strength around the magnetic attachment apparatus 30 is weakened, and magnetic field strength on an upper side of the magnetic attachment apparatus 30 is enhanced.

As shown in FIG. 4, the magnetic attachment apparatus 30 and the charging coil 20 in the charging module 10 are disposed on a same surface. In another embodiment, the magnetic attachment apparatus 30 and the charging coil 20 of the charging module 10 each may be provided with a plurality of surfaces, and the plurality of surfaces are parallel or close to each other.

As shown in FIG. 4, the charging coil 230 in the charging module 10 is disposed on an outside of the magnetic attachment apparatus 30. In another embodiment, the electric coil 20 in the charging module 10 may be disposed on an inside of the magnetic attachment apparatus 30.

In the electronic device 100 and the charger 200 provided in this embodiment of this application, magnetic field strength around the magnetic attachment apparatus is weakened, to reduce impact of the magnetic attachment apparatus on another magnetic sensitive component in the electronic device 100 and the charger 200. In addition, in the electronic device 100 or the charger 200, a soft magnetic material may be omitted or reduced, to facilitate miniaturization of the electronic device 100 or the charger 200.

There are a plurality of embodiments of the charging module 10 in the electronic device 100 or the charger 200 shown in FIG. 4. The magnetic attachment apparatus 3 in the charging module 10 includes a plurality of magnets. A location relationship, a quantity, a magnetization pattern, a shape of a top-view cross-section, an internal magnetic field direction, and a structure of the plurality of magnets may be combined in a plurality of manners.

FIG. 5(a) is a schematic diagram of a structure of a magnetic attachment apparatus according to an embodiment of this application. As shown in FIG. 5(a), a magnetic attachment apparatus 500 includes a first assembly 510 and a second assembly 520. The first assembly 510 and the second assembly 520 are disposed on a same surface in a first direction. In other words, the first assembly 510 and the second assembly 520 are disposed on a same surface in a horizontal direction. A shape of a top-view cross-section of the first assembly 510 is a circular annulus, and the second assembly 520 is of a cylindrical structure. An inner radial dimension of the first assembly 510 is greater than or equal to a radial dimension of the second assembly 520. The second assembly 520 is disposed on an inside of the first assembly 510. In an embodiment, the first assembly 510 and the second assembly 520 may be fixedly connected, to form an integral structure. In another embodiment, the first assembly 510 and the second assembly 520 may be fastened to a same surface, and there may be a gap or a filling material between the first assembly 510 and the second assembly 520.

As shown in FIG. 5(a), a shape of a top-view cross-section of the second assembly 520 is circle, and a shape of a top-view cross-section of the first assembly 510 is a circular annulus. A magnetic field distribution of a magnet whose shape is a circle or a circular annulus is uniform, so that a magnetic field of the first assembly 510 and a magnetic field of the second assembly 520 enhance each other. In some embodiments, a shape of a top-view cross-section of the second assembly 520 may be an ellipse, and a shape of a top-view cross-section of the first assembly 510 may be an elliptical annulus. In some embodiments, a shape of a top-view cross-section of the second assembly 520 may be a polygon such as a triangle or a quadrilateral or another irregular shape, and a shape of a top-view cross-section of the first assembly 510 may be a multilateral annulus such as a triangular annulus or a quadrilateral annulus or another irregular annulus. In this embodiment of this application, based on internal space of an electronic device 100 or a charger 200, any one of the first assemblies 510 and any one of the second assemblies 520 may be selected for the magnetic attachment apparatus 500, to improve applicability of the magnetic attachment apparatus 500.

The first assembly 510 includes a first magnet 511 and a second magnet 512. The second assembly 520 includes a third magnet 520. The first magnet 511 and the second magnet 512 are stacked in a second direction. That is, the first magnet 511 and the second magnet 512 are stacked and perpendicular to a surface. A shape of a top-view cross-section of each of the first magnet 511 and the second magnet 512 is a circular annulus. In an embodiment, the first magnet 511 and the second magnet 512 may be fixedly connected, to form an integral structure. In another embodiment, the first magnet 511 and the second magnet 512 each may be fastened on a side surface of the third magnet 520, and there may be a gap or a filling material between the first magnet 511 and the second magnet 512.

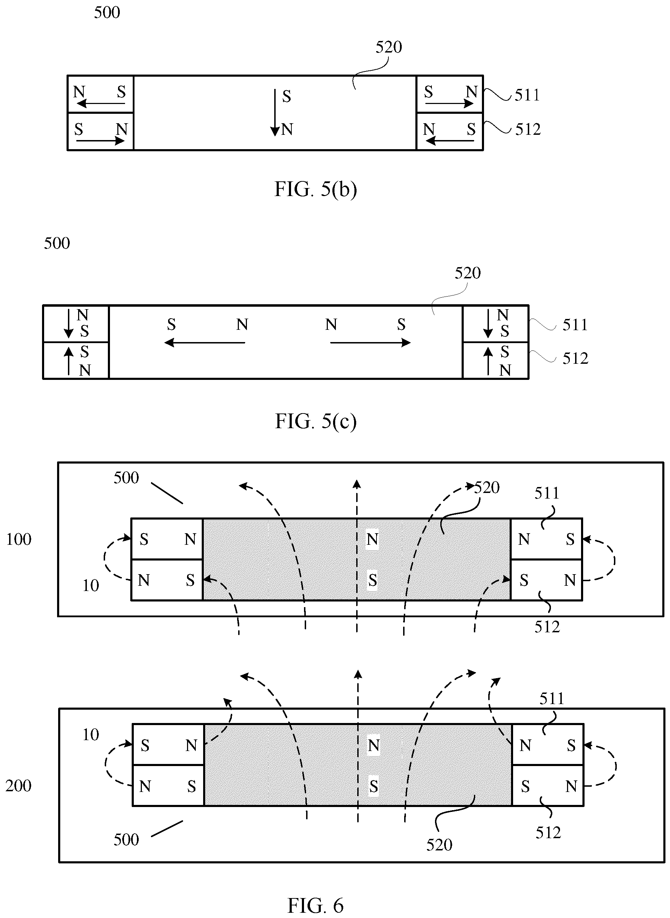

FIG. 5(b) is a schematic diagram of a magnetic field of a magnet of a magnetic attachment apparatus according to an embodiment of this application. As shown in FIG. 5(b), a magnetic attachment apparatus 500 includes a first magnet 511, a second magnet 512, and a third magnet 520. A magnetization pattern of each of the first magnet 511 and the second magnet 512 is radial magnetization. A magnetization pattern of the third magnet 520 is axial magnetization. An S pole of the first magnet 511 faces an inside of a circular annulus, and an N pole faces an outside of the circular annulus. An N pole of the second magnet 512 faces an inside of a circular annulus, and an S pole faces an outside of the circular annulus. An S pole of the third magnet 520 faces upward, and an N pole faces downward. A magnetic field direction of the first magnet 511 and a magnetic field direction of the second magnet 512 are parallel and opposite to each other. Magnetic fields radiated around by the first magnet 511 and the second magnet 512 cancel each other out, so that a magnetic field radiated around by the magnetic attachment apparatus 500 is weakened.

Internal magnetic field directions of the first magnet 511, the second magnet 512, and the third magnet 520 of the magnetic attachment apparatus 500 are further combined in a plurality of manners, so that a magnetic field radiated around by the magnetic attachment apparatus 500 can be weakened. For example, an N pole of the first magnet 511 faces an inside of a circular annulus, and an S pole faces an outside of the circular annulus. An S pole of the second magnet 512 faces an inside of a circular annulus, and an N pole faces an outside of the circular annulus. An N pole of the third magnet 520 faces upward, and an S pole faces downward. A magnetic field direction of the first magnet 511 and a magnetic field direction of the second magnet 512 are parallel and opposite to each other. Magnetic fields radiated around by the first magnet 511 and the second magnet 512 cancel each other out, so that a magnetic field radiated around by the magnetic attachment apparatus 500 is weakened.

In this embodiment of this application, in the magnetic attachment apparatus 500, a magnetic field direction of the first magnet 511 is opposite to a magnetic field direction of the second magnet 512. In other words, an included angle between the magnetic field direction of the first magnet 511 and the magnetic field direction of the second magnet 512 is approximately 180 degrees. In this embodiment of this application, an internal magnetic field direction of each of the first magnet 511 and the second magnet 512 is parallel to a surface of each of the first magnet 511 and the second magnet 512, an internal magnetic field direction of the third magnet 520 is perpendicular to a surface of the third magnet 520, and the internal magnetic field direction of each of the first magnet 511 and the second magnet 512 is perpendicular to the internal magnetic field direction of the third magnet 520. In other words, an included angle between an internal magnetic field direction of each of the first magnet 511 and the second magnet 512 and the surface of each of the first magnet 511 and the second magnet 512 is approximately 0 degrees, an included angle between the internal magnetic field direction of the third magnet 520 and the surface of the third magnet 520 is approximately 90 degrees, and an included angle between the internal magnetic field direction of each of the first magnet 511 and the second magnet 512 and the internal magnetic field direction of the third magnet 520 is approximately 90 degrees.

In this embodiment of this application, magnetic field strength on an upper side or magnetic field strength on a lower side of the magnetic attachment apparatus 500 may also be enhanced. As shown in FIG. 5(b), an S pole of the first magnet 511 faces an inside of a circular annulus, and an N pole faces an outside of the circular annulus. An N pole of the second magnet 512 faces an inside of a circular annulus, and an S pole faces an outside of the circular annulus. An S pole of the third magnet 520 faces upward, and an N pole faces downward. The S pole of the first magnet 511 and the S pole of the third magnet 520 enhance each other on the upper side of the magnetic attachment apparatus 500, so that the magnetic field strength on the upper side of the magnetic attachment apparatus 500 is enhanced.

Internal magnetic field directions of the first magnet 511, the second magnet 512, and the third magnet 520 of the magnetic attachment apparatus 500 are further combined in a plurality of manners, so that magnetic field strength on an upper side of the magnetic attachment apparatus 500 is enhanced. For example, an N pole of the first magnet 511 faces an inside of a circular annulus, and an S pole faces an outside of the circular annulus. An S pole of the second magnet 512 faces an inside of a circular annulus, and an N pole faces an outside of the circular annulus. An N pole of the third magnet 520 faces upward, and an S pole faces downward. The N pole of the first magnet 511 and the N pole of the third magnet 520 enhance each other on the upper side of the magnetic attachment apparatus 500, so that the magnetic field strength on the upper side of the magnetic attachment apparatus 500 is enhanced.

FIG. 5(c) is a schematic diagram of a magnetic field of a magnet of a magnetic attachment apparatus according to an embodiment of this application. As shown in FIG. 5(c), a magnetic attachment apparatus 500 includes a first magnet 511, a second magnet 512, and a third magnet 520. A magnetization pattern of each of the first magnet 511 and the second magnet 512 is axial magnetization. A magnetization pattern of the third magnet 520 is radial magnetization. An S pole of the first magnet 511 faces downward, and an N pole faces upward. An S pole of the second magnet 512 faces upward, and an N pole faces downward. An N pole of the third magnet 520 faces a center of a circle, and an S pole faces an outside of the circle. A magnetic field direction of the first magnet 511 and a magnetic field direction of the second magnet 512 are parallel and opposite to each other. Magnetic fields radiated around by the first magnet 511 and the second magnet 512 cancel each other out, so that a magnetic field radiated around by the magnetic attachment apparatus 500 is weakened.

Internal magnetic field directions of the first magnet 511, the second magnet 512, and the third magnet 520 of the magnetic attachment apparatus 500 are further combined in a plurality of manners, so that a magnetic field radiated around by the magnetic attachment apparatus 500 can be weakened. For example, an N pole of the first magnet 511 faces downward, and an S pole faces upward. An N pole of the second magnet 512 faces upward, and an S pole faces downward. An S pole of the third magnet 520 faces a center of a circle, and an N pole faces an outside of the circle. A magnetic field direction of the first magnet 511 and a magnetic field direction of the second magnet 512 are parallel and opposite to each other. Magnetic fields radiated around by the first magnet 511 and the second magnet 512 cancel each other out, so that a magnetic field radiated around by the magnetic attachment apparatus 500 is weakened.

A function of the first assembly 510 in this embodiment of this application is to reduce a magnetic field radiated around by the magnetic attachment apparatus 500, and a function of the second assembly 520 is to provide a magnetic adsorption force to an electronic device or a charger, and radiate a magnetic field around. Therefore, a charging coil 20, the first assembly 510, and the second assembly 520 are sequentially arranged in a first direction. The first assembly 510 is located between the charging coil 20 and the second assembly 520, to reduce a magnetic field radiated around by the second assembly 520, and reduce impact of a magnet on a magnetic core on a back of the charging coil 20 in the electronic device or the charger.

In this embodiment of this application, a magnetic attachment apparatus of a charging module includes a first assembly and a second assembly, and the first assembly and the second assembly are disposed on a same surface in a first direction. The first assembly includes a first magnet and a second magnet, and the first magnet and the second magnet are stacked in a second direction. A magnetization pattern of each of the first magnet and the second magnet is different from a magnetization pattern of a third magnet in the second assembly. A magnetization pattern of the first magnet and a magnetization pattern of the second magnet are the same. A magnetic field direction of the first magnet and a magnetic field direction of the second magnet are parallel and opposite to each other. Lateral magnetic fields cancel each other out, so that a magnetic field radiated around by the magnetic attachment apparatus is weakened. In addition, when a magnetic field direction generated by an S pole (or an N pole) of the first magnet on an upper side of the magnetic attachment apparatus is the same as a magnetic field direction generated by an S pole (or an N pole) of the third magnet on the upper side of the magnetic attachment apparatus, magnetic field strength on the upper side of the magnetic attachment apparatus is enhanced. Compared with the conventional technology, when a same magnetic attraction force is implemented, an overall size of a magnetic attachment apparatus is reduced, and the magnetic field radiated around by the magnetic attachment apparatus is effectively suppressed.

The magnetic attachment apparatus 500 provided in this embodiment of this application may be applied to the charging module 20 shown in FIG. 4. FIG. 6 is a schematic diagram of a structure of another electronic device and a charger of the electronic device according to an embodiment of this application. A difference between FIG. 6 and FIG. 4 lies in that the magnetic attachment apparatus 30 of the charging module 10 shown in FIG. 4 is replaced with the magnetic attachment apparatus 500 shown in FIG. 5. For ease of description, the charging coil 20 in the charging module 10 shown in FIG. 4 is omitted in FIG. 6.

As shown in FIG. 6, a magnetic attachment apparatus 500 of an electronic device 100 and a magnetic attachment apparatus 500 of a charger 200 may magnetically adsorb each other, to limit a location of contact between the electronic device 100 and the charger 200, and help match a charging coil 20 of the electronic device 100 and a charging coil 20 of the charger 200, so as to improve convenience of wireless charging.

As shown in FIG. 6, the magnetic attachment apparatus 500 is disposed on an internal lower side of the electronic device 100. A first assembly 510 and a second assembly 520 of the magnetic attachment apparatus 500 are disposed next to each other on a same surface in a first direction, and a first magnet 511 of the first assembly 510 and a second assembly 512 are stacked in a second direction. In an embodiment, the first assembly 510 and the second assembly 520 of the magnetic attachment apparatus 500 may be disposed next to each other on an inner surface of a housing on a lower side of the electronic device 100 or a substrate inside the electronic device 100. In other words, a same surface may be the inner surface of the housing on the lower side of the electronic device 100 or the substrate inside the electronic device 100. In the electronic device 100, magnetic field strength radiated around by the magnetic attachment apparatus 500 is weakened, and magnetic field strength on a lower side of the magnetic attachment apparatus 500 is enhanced.

For example, an N pole of the first magnet 511 faces an inside of a circular annulus, and an S pole faces an outside of the circular annulus. An S pole of a second magnet 512 faces an inside of a circular annulus, and an N pole faces an outside of the circular annulus. Correspondingly, a magnetic field direction of the first magnet 511 and a magnetic field direction of the second magnet 512 are parallel and opposite to each other. Magnetic fields radiated around by the first magnet 511 and the second magnet 512 cancel each other out, so that the magnetic field radiated around by the magnetic attachment apparatus 500 is weakened. In addition, the S pole of the second magnet 512 faces the inside of the circular annulus, and the N pole faces the outside of the circular annulus. An S pole of a third magnet 520 faces upward, and an N pole faces downward. The S pole of the second magnet 512 and the S pole of the third magnet 520 enhance each other on the lower side of the electronic device 100, so that magnetic field strength on the lower side of the electronic device 100 is enhanced, and a magnetic adsorption force between the lower side of the electronic device 100 and an upper side of the charger 200 is enhanced, to better limit a location of contact between the electronic device 100 and the charger 200, and help match the charging coil 20 of the electronic device 100 and the charging coil 20 of the charger 200, so as to improve convenience of wireless charging.

As shown in FIG. 6, the magnetic attachment apparatus 500 is disposed on an internal upper side of the charger 200. A first assembly 510 and a second assembly 520 of the magnetic attachment apparatus 500 are disposed next to each other on a same surface in a first direction, and a first magnet 511 of the first assembly 510 and a second assembly 512 are stacked in a second direction. In an embodiment, the first assembly 510 and the second assembly 520 of the magnetic attachment apparatus 500 may be disposed next to each other on an inner surface of a housing on an upper side of the charger 200 or a substrate inside the charger 200. In other words, a same surface may be the inner surface of the housing on the upper side of the charger 200 or the substrate side the charger 200. In the charger 200, magnetic field strength radiated around by the magnetic attachment apparatus 500 is weakened, and magnetic field strength on an upper side of the magnetic attachment apparatus 500 is enhanced.

For example, an N pole of the first magnet 511 faces an inside of a circular annulus, and an S pole faces an outside of the circular annulus. An S pole of a second magnet 512 faces an inside of a circular annulus, and an N pole faces an outside of the circular annulus. Correspondingly, a magnetic field direction of the first magnet 511 and a magnetic field direction of the second magnet 512 are parallel and opposite to each other. Magnetic fields radiated around by the first magnet 511 and the second magnet 512 cancel each other out, so that the magnetic field radiated around by the magnetic attachment apparatus 500 is weakened.

In addition, the N pole of the first magnet 511 faces the inside of the circular annulus, and the S pole faces the outside of the circular annulus. An N pole of the third magnet 520 faces upward, and an S pole faces downward. The N pole of the first magnet 511 and the N pole of the third magnet 520 enhance each other on the upper side of the charger 200, so that magnetic field strength on the upper side of the charger 200 is enhanced, and a magnetic adsorption force between a lower side of the electronic device 100 and the upper side of the charger 200 is enhanced, to better limit a location of contact between the electronic device 100 and the charger 200, and help match the charging coil 20 of the electronic device 100 and the charging coil 20 of the charger 200, so as to improve convenience of wireless charging.

In this embodiment, a shape of a top-view cross-section of the magnetic attachment apparatus 500 is a circle or a polygon, and a charging coil 20 of a charging module 10 may be disposed on an outside of the first assembly 510 of the magnetic attachment apparatus 500. The charging coil 20, the first assembly 510, and the second assembly 520 are sequentially arranged in the first direction.

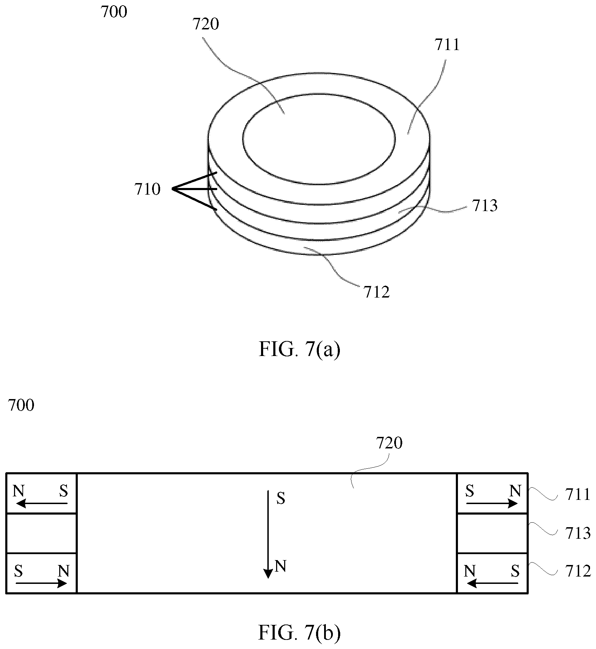

FIG. 7(a) is a schematic diagram of a structure of another magnetic attachment apparatus according to an embodiment of this application. As shown in FIG. 7(a), a magnetic attachment apparatus 700 includes a first assembly 710 and a second assembly 720. The first assembly 710 and the second assembly 720 are disposed on a same surface in a first direction. In other words, the first assembly 710 and the second assembly 720 are disposed on a same surface in a horizontal direction.

The first assembly 710 includes a first magnet 711, a second magnet 712, and a filling material 713. The second assembly 720 includes a third magnet 720. The first magnet 711, the second magnet 712, and the filling material 713 are stacked in a second direction. That is, the first magnet 711 and the second magnet 712 are stacked and perpendicular to a surface. The filling material 713 is disposed between the first magnet 711 and the second magnet 712. Shapes of the first magnet 711, the second magnet 712, and the filling material 713 are the same, and a shape of a top-view cross-section of each of the first magnet 711, the second magnet 712, and the filling material 713 is a circular annulus. In an embodiment, the first magnet 711, the second magnet 712, and the filling material 713 may be fixedly connected, to form an integrated structure. In another embodiment, the first magnet 711, the second magnet 712, and the filling material 713 each may be fastened on a side surface of the third magnet 720.

Compared with the magnetic attachment apparatus 500 shown in FIG. 5(a), in the magnetic attachment apparatus 700, the filling material 713 is added, and is disposed between the first magnet 711 and the second magnet 712. The filling material 713 may include one or more of a magnet, an isolating material, or a gap. In an embodiment, the filling material 713 may include a magnet. In an embodiment, the filling material 713 may include a non-magnetic isolating material, and is filled in a gap between the first magnet 711 and the second magnet 712, to reduce volumes of the first magnet 711 and the second magnet 712, and reduce costs of a magnet material. In another embodiment, the filling material 713 may include a gap with a specific volume, to reduce a weight. In other words, when the first magnet 711 and the second magnet 712 are stacked in the second direction, an upper side surface of the first magnet 711 and an upper side surface of the third magnet 720 are on a plane, and a lower side surface of the second magnet 712 and a lower side surface of the third magnet 720 are on a plane. A gap with a preset volume is reserved between the first magnet 711 and the second magnet 712.

FIG. 7(b) is a schematic diagram of a magnetic field of a magnet of a magnetic attachment apparatus according to an embodiment of this application. As shown in FIG. 7(b), a magnetic attachment apparatus 700 includes a first magnet 711, a second magnet 712, a filling material 713, and a third magnet 720. A magnetization pattern of each of the first magnet 711 and the second magnet 712 is radial magnetization. A magnetization pattern of the third magnet 720 is axial magnetization. An S pole of the first magnet 711 faces an inside of a circular annulus, and an N pole faces an outside of the circular annulus. An N pole of the second magnet 712 faces an inside of a circular annulus, and an S pole faces an outside of the circular annulus. An S pole of a third magnet 720 faces upward, and an N pole faces downward. A magnetic field direction of the first magnet 711 and a magnetic field direction of the second magnet 712 are parallel and opposite to each other. Magnetic fields radiated around by the first magnet 711 and the second magnet 712 cancel each other out, so that a magnetic field radiated around by the magnetic attachment apparatus 700 is weakened. In an embodiment, the filling material 713 may include an axially-magnetized magnet.

In this embodiment, a magnetic field radiated around by a middle part of a side surface of the third magnet 720 is small. Therefore, no magnet is disposed in the middle part of the side surface of the third magnet 720. Instead, only the first magnet 711 is disposed on an upper part of the side surface of the third magnet 720, and the second magnet 712 is disposed on a lower part of the side surface of the third magnet 720, to reduce the magnetic field radiated around by the magnetic attachment apparatus 700. Compared with the magnetic attachment apparatus 500 shown in FIG. 5(a), when a same magnetic attraction force and a same lateral magnetic field are implemented, a quantity of used magnet materials is reduced, to reduce costs of an electronic device 100 and a charger 200.

In this embodiment, a shape of a top-view cross-section of the magnetic attachment apparatus 700 is a circle or a polygon, and a charging coil 20 of a charging module 10 may be disposed on an outside of a first assembly 710 of the magnetic attachment apparatus 700. The charging coil 20, the first assembly 710, and a second assembly 720 are sequentially arranged in a first direction.

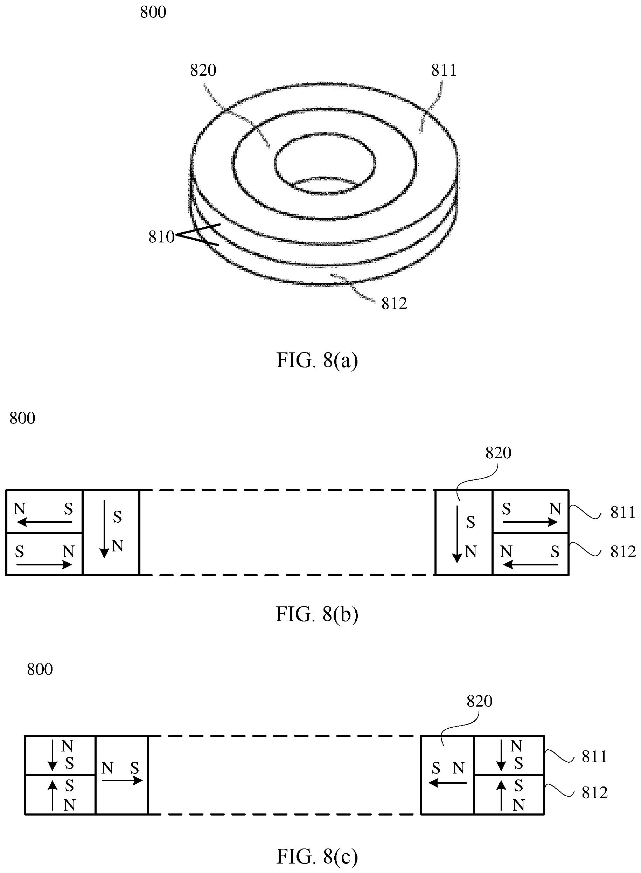

FIG. 8(a) is a schematic diagram of a structure of another magnetic attachment apparatus according to an embodiment of this application. As shown in FIG. 8(a), a magnetic attachment apparatus 800 includes a first assembly 810 and a second assembly 820. The first assembly 810 and the second assembly 820 are disposed on a same surface in a first direction. In other words, the first assembly 810 and the second assembly 820 are disposed on a same surface in a horizontal direction.

A shape of a top-view cross-section of the first assembly 810 is a circular annulus, and a shape of a top-view cross-section of the second assembly 820 is a circular annulus. An inner radial dimension of the first assembly 810 is greater than or equal to a radial dimension of the second assembly 820. The second assembly 820 is disposed on an inside of the first assembly 810. In an embodiment, the first assembly 810 and the second assembly 820 may be fixedly connected, to form an integral structure. In another embodiment, the first assembly 810 and the second assembly 820 may be fastened to a same surface, and there may be a gap or a filling material between the first assembly 810 and the second assembly 820.

As shown in FIG. 8(a), the shape of the top-view cross-section of the first assembly 810 and the shape of the top-view cross-section of the second assembly 820 each are a circular annulus. A magnetic field distribution of a magnet whose shape is a circular annulus is uniform, so that a magnetic field of the first assembly 810 and a magnetic field of the second assembly 820 enhance each other. In some embodiments, a shape of a top-view cross-section of each of the first assembly 810 and the second assembly 820 is an ellipse. In some embodiments, a shape of a top-view cross-section of each of the first assembly 810 and the second assembly 820 may be a polygon such as a triangle or a quadrilateral or another irregular shape. In this embodiment of this application, based on internal space of an electronic device 100 or a charger 200, any one of the first assemblies 810 and any one of the second assemblies 820 may be selected for the magnetic attachment apparatus 800, to improve applicability of the magnetic attachment apparatus 800.

The first assembly 810 includes a first magnet 811 and a second magnet 812, and the second assembly 820 includes a third magnet 820. The first magnet 811 and the second magnet 812 are stacked in a second direction. That is, the first magnet 811 and the second magnet 812 are stacked and perpendicular to a surface. A shape of the first magnet 811 and a shape of the second magnet 812 are the same, and a shape of a top-view cross-section of each of the first magnet 811 and the second magnet 812 is a circular annulus. In an embodiment, the first magnet 811 and the second magnet 812 may be fixedly connected, to form an integral structure. In another embodiment, the first magnet 811 and the second magnet 812 each may be fastened on a side surface of the third magnet 820, and there may be a gap or a filling material between the first magnet 811 and the second magnet 812.

FIG. 8(b) is a schematic diagram of a magnetic field of a magnet of a magnetic attachment apparatus according to an embodiment of this application. As shown in FIG. 8(b), a magnetic attachment apparatus 800 includes a first magnet 811, a second magnet 812, and a third magnet 820. A magnetization pattern of each of the first magnet 811 and the second magnet 812 is radial magnetization. A magnetization pattern of the third magnet 820 is axial magnetization. An S pole of the first magnet 811 faces an inside of a circular annulus, and an N pole faces an outside of the circular annulus. An N pole of the second magnet 812 faces an inside of a circular annulus, and an S pole faces an outside of the circular annulus. An S pole of a third magnet 820 faces upward, and an N pole faces downward. A magnetic field direction of the first magnet 811 and a magnetic field direction of the second magnet 812 are parallel and opposite to each other. Magnetic fields radiated around by the first magnet 811 and the second magnet 812 cancel each other out, so that a magnetic field radiated around by the magnetic attachment apparatus 800 is weakened.

Internal magnetic field directions of the first magnet 811, the second magnet 812, and the third magnet 820 of the magnetic attachment apparatus 800 are further combined in a plurality of manners, so that a magnetic field radiated around by the magnetic attachment apparatus 800 can be weakened. For example, an N pole of the first magnet 811 faces an inside of a circular annulus, and an S pole faces an outside of the circular annulus. An S pole of the second magnet 812 faces an inside of a circular annulus, and an N pole faces an outside of the circular annulus. An N pole of the third magnet 820 faces upward, and an S pole faces downward. A magnetic field direction of the first magnet 811 and a magnetic field direction of the second magnet 812 are parallel and opposite to each other. Magnetic fields radiated around by the first magnet 811 and the second magnet 812 cancel each other out, so that a magnetic field radiated around by the magnetic attachment apparatus 800 is weakened.

In this embodiment of this application, magnetic field strength on an upper side or magnetic field strength on a lower side of the magnetic attachment apparatus 800 may also be enhanced. As shown in FIG. 8(b), an S pole of the first magnet 811 faces an inside of a circular annulus, and an N pole faces an outside of the circular annulus. An N pole of the second magnet 812 faces an inside of a circular annulus, and an S pole faces an outside of the circular annulus. An S pole of the third magnet 820 faces upward, and an N pole faces downward. The S pole of the first magnet 811 and the S pole of the third magnet 820 enhance each other on the upper side of the magnetic attachment apparatus 800, so that the magnetic field strength on the upper side of the magnetic attachment apparatus 800 is enhanced. Internal magnetic field directions of the first magnet 811, the second magnet 812, and the third magnet 820 of the magnetic attachment apparatus 800 are further combined in a plurality of manners, so that magnetic field strength on an upper side of the magnetic attachment apparatus 800 is enhanced. Details are not described herein again in this application.

FIG. 8(c) is a schematic diagram of a magnetic field of a magnet of a magnetic attachment apparatus according to an embodiment of this application. As shown in FIG. 8(c), a magnetic attachment apparatus 800 includes a first magnet 811, a second magnet 812, and a third magnet 820. A magnetization pattern of each of the first magnet 811 and the second magnet 812 is axial magnetization. A magnetization pattern of the third magnet 820 is radial magnetization. An S pole of the first magnet 811 faces downward, and an N pole faces upward. An S pole of the second magnet 812 faces upward, and an N pole faces downward. An S pole of the third magnet 820 faces an inside of a circular annulus, and an N pole faces an outside of the circular annulus. A magnetic field direction of the first magnet 811 and a magnetic field direction of the second magnet 812 are parallel and opposite to each other. Magnetic fields radiated around by the first magnet 811 and the second magnet 812 cancel each other out, so that a magnetic field radiated around by the magnetic attachment apparatus 800 is weakened.

Internal magnetic field directions of the first magnet 811, the second magnet 812, and the third magnet 820 of the magnetic attachment apparatus 800 are further combined in a plurality of manners, so that a magnetic field radiated around by the magnetic attachment apparatus 800 can be weakened. For example, an N pole of the first magnet 811 faces downward, and an S pole faces upward. An N pole of the second magnet 812 faces upward, and an S pole faces downward. An N pole of the third magnet 820 faces an inside of a circular annulus, and an S pole faces an outside of the circular annulus. A magnetic field direction of the first magnet 811 and a magnetic field direction of the second magnet 812 are parallel and opposite to each other. Magnetic fields radiated around by the first magnet 811 and the second magnet 812 cancel each other out, so that a magnetic field radiated around by the magnetic attachment apparatus 800 is weakened.

In this embodiment of this application, magnetic field strength on an upper side or magnetic field strength on a lower side of the magnetic attachment apparatus 800 may also be enhanced. As shown in FIG. 8(c), an S pole of the first magnet 811 faces downward, and an N pole faces upward. An S pole of the second magnet 812 faces upward, and an N pole faces downward. An S pole of the third magnet 820 faces an inside of a circular annulus, and an N pole faces an outside of the circular annulus. The N pole of the first magnet 811 and the N pole of the third magnet 820 enhance each other on the upper side of the magnetic attachment apparatus 800, so that the magnetic field strength on the upper side of the magnetic attachment apparatus 800 is enhanced. Internal magnetic field directions of the first magnet 811, the second magnet 812, and the third magnet 820 of the magnetic attachment apparatus 800 are further combined in a plurality of manners, so that magnetic field strength on an upper side of the magnetic attachment apparatus 800 is enhanced. Details are not described herein again in this application.

Compared with the magnetic attachment apparatus 500 shown in FIG. 5(a), in the magnetic attachment apparatus 800, for the third magnet 820, a cylindrical magnet is replaced with an annular magnet. When a same magnetic attraction force and a same lateral magnetic field are implemented, a quantity of used magnet materials is reduced, to reduce costs of an electronic device 100 and a charger 200. In addition, when a shape of a third magnet 820 in each of the electronic device 100 and the charger 200 is an annulus, the electronic device 100 is placed on the charger 200, to avoid interference between an alignment magnet and a middle structure. In this embodiment of this application, the magnetic attachment apparatus 800 is applicable to an electronic device or charger that is adsorbed in a non-plane form such as a shaft-sleeve form.

In this embodiment, a shape of a top-view cross-section of the magnetic attachment apparatus 800 is a circle or a polygon, and a charging coil 20 of a charging module 10 may be disposed on an outside of a first assembly 810 of the magnetic attachment apparatus 800. The charging coil 20, the first assembly 810, and a second assembly 820 are sequentially arranged in a first direction.

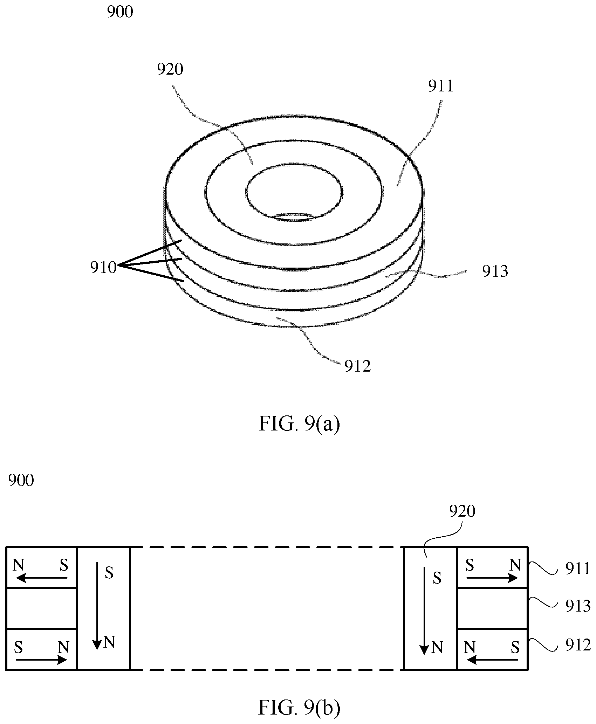

FIG. 9(a) is a schematic diagram of a structure of another magnetic attachment apparatus according to an embodiment of this application. As shown in FIG. 9(a), a magnetic attachment apparatus 900 includes a first assembly 910 and a second assembly 920. The first assembly 910 and the second assembly 920 are disposed on a same surface in a first direction. In other words, the first assembly 910 and the second assembly 920 are disposed on a same surface in a horizontal direction.

The first assembly 910 includes a first magnet 911, a second magnet 912, and a filling material 913, and the second assembly 920 includes a third magnet 920. The first magnet 911, the second magnet 912, and the filling material 913 are stacked in a second direction. That is, the first magnet 911 and the second magnet 912 are stacked and perpendicular to a surface. The filling material 913 is disposed between the first magnet 911 and the second magnet 912. A shape of a top-view cross-section of each of the first magnet 911, the second magnet 912, and the filling material 913 is a circular annulus. In an embodiment, the first magnet 911, the second magnet 912, and the filling material 913 may be fixedly connected, to form an integrated structure. In another embodiment, the first magnet 911, the second magnet 912, and the filling material 913 each may be fastened on a side surface of the third magnet 920.

Compared with the magnetic attachment apparatus 800 shown in FIG. 8(a), in the magnetic attachment apparatus 900, the filling material 913 is added, and is disposed between the first magnet 911 and the second magnet 912. The filling material 913 may include one or more of a magnet, an isolating material, or a gap. In an embodiment, the filling material 713 may include a magnet. In an embodiment, the filling material 913 may be a non-magnetic isolating material, and is filled in a gap between the first magnet 911 and the second magnet 912, to reduce volumes of the first magnet 911 and the second magnet 912, and reduce costs of a magnet material. In another embodiment, the filling material 913 may be a gap of a specific volume. In other words, when the first magnet 911 and the second magnet 912 are stacked in the second direction, an upper side surface of the first magnet 911 and an upper side surface of the third magnet 920 are on a plane, and a lower side surface of the second magnet 912 and a lower side surface of the third magnet 920 are on a plane. A gap with a preset volume is reserved between the first magnet 911 and the second magnet 912.

FIG. 9(b) is a schematic diagram of a magnetic field of a magnet of a magnetic attachment apparatus according to an embodiment of this application. As shown in FIG. 9(b), a magnetic attachment apparatus 900 includes a first magnet 911, a second magnet 912, a filling material 913, and a third magnet 920. A magnetization pattern of each of the first magnet 911 and the second magnet 912 is radial magnetization. A magnetization pattern of the third magnet 920 is axial magnetization. An S pole of the first magnet 911 faces an inside of a circular annulus, and an N pole faces an outside of the circular annulus. An N pole of the second magnet 912 faces an inside of a circular annulus, and an S pole faces an outside of the circular annulus. An S pole of the third magnet 920 faces upward, and an N pole faces downward. A magnetic field direction of the first magnet 911 and a magnetic field direction of the second magnet 912 are parallel and opposite to each other. Magnetic fields radiated around by the first magnet 911 and the second magnet 912 cancel each other out, so that a magnetic field radiated around by the magnetic attachment apparatus 900 is weakened. In an embodiment, the filling material 913 may include an axially-magnetized magnet.

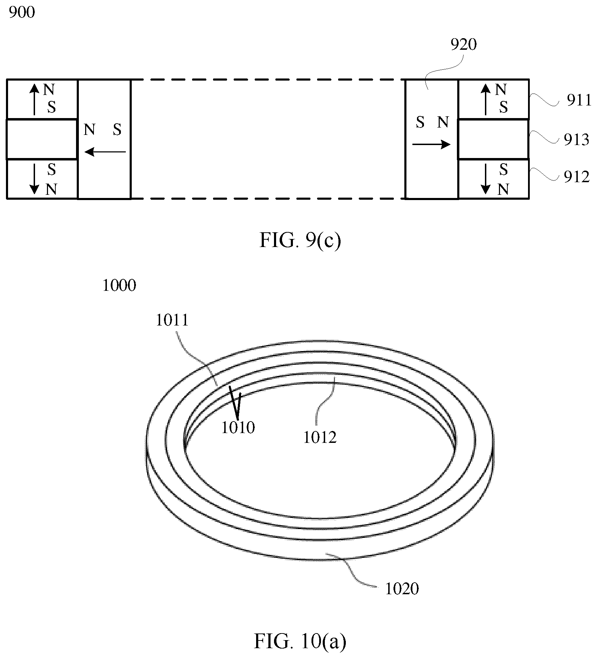

FIG. 9(c) is a schematic diagram of a magnetic field of a magnet of a magnetic attachment apparatus according to an embodiment of this application. As shown in FIG. 9(c), a magnetic attachment apparatus 900 includes a first magnet 911, a second magnet 912, a filling material 913, and a third magnet 920. A magnetization pattern of each of the first magnet 911 and the second magnet 912 is axial magnetization. A magnetization pattern of the third magnet 920 is radial magnetization. An S pole of the first magnet 911 faces downward, and an N pole faces upward. An S pole of the second magnet 912 faces upward, and an N pole faces downward. An S pole of the third magnet 920 faces an inside of a circular annulus, and an N pole faces an outside of the circular annulus. A magnetic field direction of the first magnet 911 and a magnetic field direction of the second magnet 912 are parallel and opposite to each other. Magnetic fields radiated around by the first magnet 911 and the second magnet 912 cancel each other out, so that a magnetic field radiated around by the magnetic attachment apparatus 900 is weakened. In an embodiment, the filling material 913 may include a radially-magnetized magnet.

In this embodiment, a shape of a top-view cross-section of the magnetic attachment apparatus 900 is a circle or a polygon, and a charging coil 20 of a charging module 10 may be disposed on an outside of a first assembly 910 of the magnetic attachment apparatus 900. The charging coil 20, the first assembly 910, and a second assembly 920 are sequentially arranged in a first direction.

In this embodiment, a magnetic field radiated around by a middle part of a side surface of the third magnet 920 is small. Therefore, no magnet is disposed in the middle part of the side surface of the third magnet 920. Instead, only the first magnet 911 is disposed on an upper part of the side surface of the third magnet 920, and the second magnet 912 is disposed on a lower part of the side surface of the third magnet 920, to reduce the magnetic field radiated around by the magnetic attachment apparatus 900. Compared with the magnetic attachment apparatus 800 shown in FIG. 8(a), when a same magnetic attraction force and a same lateral magnetic field are implemented, a quantity of used magnet materials is reduced, to reduce costs of an electronic device 100 and a charger 200.

FIG. 10(a) is a schematic diagram of a structure of another magnetic attachment apparatus according to an embodiment of this application. As shown in FIG. 10(a), a magnetic attachment apparatus 1000 includes a first assembly 1010 and a second assembly 1020. The first assembly 1010 and the second assembly 1020 are disposed on a same surface in a first direction. In other words, the first assembly 1010 and the second assembly 1020 are disposed on a same surface in a horizontal direction.

A shape of a top-view cross-section of the first assembly 1010 is a circular annular, and a shape of a top-view cross-section of the second assembly 1020 is also a circular annular. An inner radial dimension of the second assembly 1020 is greater than or equal to an outer radial dimension of the first assembly 1010. The second assembly 1020 is disposed on an outside of the first assembly 1010. An inner radial dimension of the first assembly 1010 is greater than or equal to an outer radial dimension of a charging coil 20. In an embodiment, the first assembly 1010 and the second assembly 1020 may be fixedly connected, to form an integral structure. In another embodiment, the first assembly 1010 and the second assembly 1020 may be fastened to a same surface, and there may be a gap or a filling material between the first assembly 1010 and the second assembly 1020.

As shown in FIG. 10(a), the shape of the top-view cross-section of the first assembly 1010 and the shape of the top-view cross-section of the second assembly 1020 each are a circular annulus. A magnetic field distribution of a magnet whose shape is a circular annulus is uniform, so that a magnetic field of the first assembly 1010 and a magnetic field of the second assembly 1020 enhance each other. In some embodiments, a shape of a top-view cross-section of each of the first assembly 1010 and the second assembly 1020 is an ellipse. In some embodiments, a shape of a top-view cross-section of each of the first assembly 1010 and the second assembly 1020 may be a polygon such as a triangle or a quadrilateral or another irregular shape. In this embodiment of this application, based on internal space of an electronic device 100 or a charger 200, any one of the first assemblies 1010 and the second assemblies 1020 may be selected for the magnetic attachment apparatus 1000, to improve applicability of the magnetic attachment apparatus 1000.

The first assembly 1010 includes a first magnet 1011 and a second magnet 1012, and the second assembly 1020 includes a third magnet 1020. The first magnet 1011 and the second magnet 1012 are stacked in a second direction. That is, the first magnet 1011 and the second magnet 1012 are stacked and perpendicular to a surface. A shape of the first magnet 1011 and a shape of the second magnet 1012 are the same, and a shape of a top-view cross-section of each of the first magnet 1011 and the second magnet 1012 is a circular annulus. In an embodiment, the first magnet 1011 and the second magnet 1012 may be fixedly connected, to form an integral structure. In another embodiment, the first magnet 1011 and the second magnet 1012 each may be fastened on a side surface of the third magnet 1020, and there may be a gap or a filling material between the first magnet 1011 and the second magnet 1012.

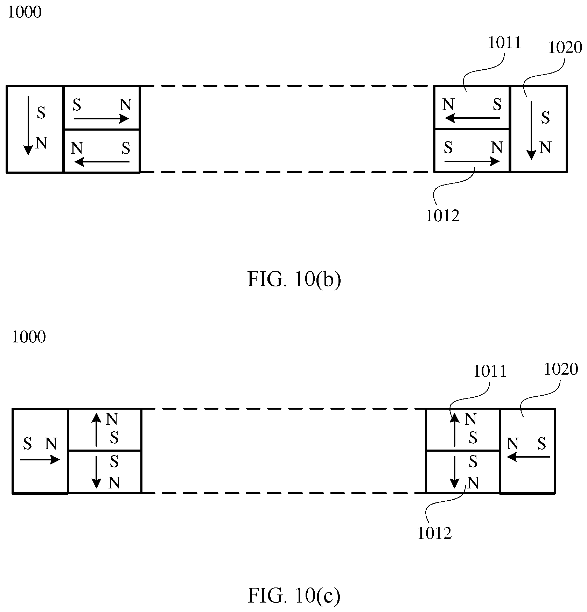

FIG. 10(b) is a schematic diagram of a magnetic field of a magnet of a magnetic attachment apparatus according to an embodiment of this application. As shown in FIG. 10(b), a magnetic attachment apparatus 1000 includes a first magnet 1011, a second magnet 1012, and a third magnet 1020. A magnetization pattern of each of the first magnet 1011 and the second magnet 1012 is radial magnetization. A magnetization pattern of the third magnet 1020 is axial magnetization. An N pole of the first magnet 1011 faces an inside of a circular annulus, and an S pole faces an outside of the circular annulus. An S pole of the second magnet 1012 faces an inside of a circular annulus, and an N pole faces an outside of the circular annulus. An S pole of the third magnet 1020 faces upward, and an N pole faces downward. A magnetic field direction of the first magnet 1011 and a magnetic field direction of the second magnet 1012 are parallel and opposite to each other. Magnetic fields radiated to an inside by the first magnet 1011 and the second magnet 1012 cancel each other out, so that a magnetic field radiated to an inside by the magnetic attachment apparatus 1000 is weakened.

Internal magnetic field directions of the first magnet 1011, the second magnet 1012, and the third magnet 1020 of the magnetic attachment apparatus 1000 are further combined in a plurality of manners, so that a magnetic field radiated to an inside by the magnetic attachment apparatus 1000 can be weakened. For example, an S pole of the first magnet 1011 faces an inside of a circular annulus, and an N pole faces an outside of the circular annulus. An N pole of the second magnet 1012 faces an inside of a circular annulus, and an S pole faces an outside of the circular annulus. An N pole of the third magnet 1020 faces upward, and an S pole faces downward. A magnetic field direction of the first magnet 1011 and a magnetic field direction of the second magnet 1012 are parallel and opposite to each other. Magnetic fields radiated to an inside by the first magnet 1011 and the second magnet 1012 cancel each other out, so that a magnetic field radiated to an inside by the magnetic attachment apparatus 1000 is weakened.

In this embodiment of this application, magnetic field strength on an upper side or magnetic field strength on a lower side of the magnetic attachment apparatus 1000 may also be enhanced. As shown in FIG. 10(b), an N pole of the first magnet 1011 faces an inside of a circular annulus, and an S pole faces an outside of the circular annulus. An S pole of the second magnet 1012 faces an inside of a circular annulus, and an N pole faces an outside of the circular annulus. An S pole of the third magnet 1020 faces upward, and an N pole faces downward. The S pole of the first magnet 1011 and the S pole of the third magnet 1020 enhance each other on the upper side of the magnetic attachment apparatus 1000, so that the magnetic field strength on the upper side of the magnetic attachment apparatus 1000 is enhanced. Internal magnetic field directions of the first magnet 1011, the second magnet 1012, and the third magnet 1020 of the magnetic attachment apparatus 1000 are further combined in a plurality of manners, so that magnetic field strength on an upper side of the magnetic attachment apparatus 1000 is enhanced. Details are not described herein again in this application.

FIG. 10(c) is a schematic diagram of a magnetic field of a magnet of a magnetic attachment apparatus according to an embodiment of this application. As shown in FIG. 10(c), a magnetic attachment apparatus 1000 includes a first magnet 1011, a second magnet 1012, and a third magnet 1020. A magnetization pattern of each of the first magnet 1011 and the second magnet 1012 is axial magnetization. A magnetization pattern of the third magnet 1020 is radial magnetization. An S pole of the first magnet 1011 faces downward, and an N pole faces upward. An S pole of the second magnet 1012 faces upward, and an N pole faces downward. An N pole of the third magnet 1020 faces an inside of a circular annulus, and an S pole faces an outside of the circular annulus. A magnetic field direction of the first magnet 1011 and a magnetic field direction of the second magnet 1012 are parallel and opposite to each other. Magnetic fields radiated to an inside by the first magnet 1011 and the second magnet 1012 cancel each other out, so that a magnetic field radiated to an inside by the magnetic attachment apparatus 1000 is weakened.

Internal magnetic field directions of the first magnet 1011, the second magnet 1012, and the third magnet 1020 of the magnetic attachment apparatus 1000 are further combined in a plurality of manners, so that a magnetic field radiated to an inside by the magnetic attachment apparatus 1000 can be weakened. For example, an N pole of the first magnet 1011 faces downward, and an S pole faces upward. An N pole of the second magnet 1012 faces upward, and an S pole faces downward. An S pole of the third magnet 1020 faces an inside of a circular annulus, and an N pole faces an outside of the circular annulus. A magnetic field direction of the first magnet 1011 and a magnetic field direction of the second magnet 1012 are parallel and opposite to each other. Magnetic fields radiated to an inside by the first magnet 1011 and the second magnet 1012 cancel each other out, so that a magnetic field radiated to an inside by the magnetic attachment apparatus 1000 is weakened.

In this embodiment of this application, magnetic field strength on an upper side or magnetic field strength on a lower side of the magnetic attachment apparatus 1000 may also be enhanced. As shown in FIG. 10(c), an N pole of the first magnet 1011 faces downward, and an S pole faces upward. An N pole of the second magnet 1012 faces upward, and an S pole faces downward. An S pole of the third magnet 1020 faces an inside of a circular annulus, and an N pole faces an outside of the circular annulus. The N pole of the first magnet 1011 and the N pole of the third magnet 1020 enhance each other on the upper side of the magnetic attachment apparatus 1000, so that the magnetic field strength on the upper side of the magnetic attachment apparatus 1000 is enhanced. Internal magnetic field directions of the first magnet 1011, the second magnet 1012, and the third magnet 1020 of the magnetic attachment apparatus 1000 are further combined in a plurality of manners, so that magnetic field strength on an upper side of the magnetic attachment apparatus 1000 is enhanced. Details are not described herein again in this application.

In this embodiment, a shape of a top-view cross-section of the magnetic attachment apparatus 1000 is a circle or a polygon, and a charging coil 20 of a charging module 10 may be disposed on an inside of a first assembly 1010 of the magnetic attachment apparatus 1000. The charging coil 20, the first assembly 1010, and a second assembly 1020 are sequentially arranged in a first direction.

Compared with the magnetic attachment apparatus 800 shown in FIG. 8(a), in the magnetic attachment apparatus 1000, the first assembly 1010 and the second assembly 1020 each are in a shape of a circular annulus, and the first assembly 1010 is disposed on an inside of the second assembly 1020, to reduce a magnetic field radiated to an inside by a magnet in the second assembly 1020. The magnetic attachment apparatus 1000 has a large radius, and may be sleeved on an outside of the charging coil 20, to reduce impact of the magnet on a magnetic core on a back of the charging coil 20 in an electronic device or a charger.

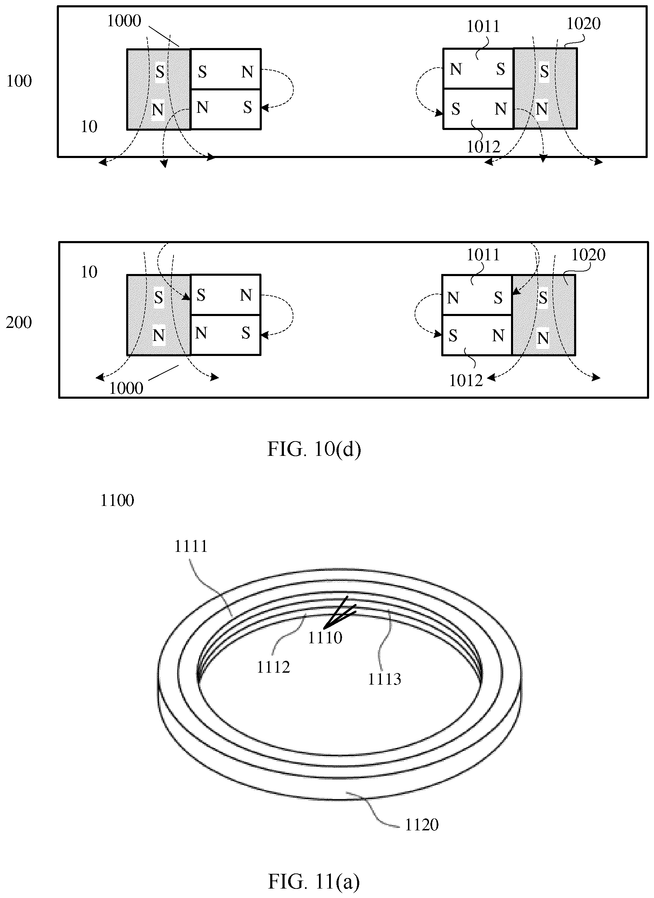

The magnetic attachment apparatus 1000 provided in this embodiment of this application may be applied to the charging module 20 shown in FIG. 4. FIG. 10(d) is a schematic diagram of a structure of another electronic device and a charger of the electronic device according to an embodiment of this application. A difference between FIG. 10(d) and FIG. 4 lies in that the magnetic attachment apparatus 30 of the charging module 10 shown in FIG. 4 is replaced with a magnetic attachment apparatus 1000 shown in FIG. 10(d). In addition, a charging coil 20 is disposed on an inside of the magnetic attachment apparatus 1000. For ease of description, the charging coil 20 in the charging module 10 shown in FIG. 4 is omitted in FIG. 10(d).

As shown in FIG. 10(d), a magnetic attachment apparatus 1000 of an electronic device 100 and a magnetic attachment apparatus 1000 of a charger 200 may magnetically adsorb each other, to limit a location of contact between the electronic device 100 and the charger 200, and help match a charging coil 20 of the electronic device 100 and a charging coil 20 of the charger 200, so as to improve convenience of wireless charging.

As shown in FIG. 10(d), the magnetic attachment apparatus 1000 is disposed on an internal lower side of the electronic device 100. A first assembly 1010 and a second assembly 1020 of the magnetic attachment apparatus 1000 are disposed next to each other on a same surface in a first direction, and a first magnet 1011 of the first assembly 1010 and a second assembly 1012 are stacked in a second direction. In an embodiment, the first assembly 1010 and the second assembly 1020 of the magnetic attachment apparatus 1000 may be disposed next to each other on an inner surface of a housing on a lower side of the electronic device 100 or a substrate inside the electronic device 100. In the electronic device 100, magnetic field strength radiated to an inside by the magnetic attachment apparatus 1000 is weakened, and magnetic field strength on a lower side of the magnetic attachment apparatus 1000 is enhanced.

As shown in FIG. 10(d), the magnetic attachment apparatus 1000 is disposed on an internal upper side of the charger 200. A first assembly 1010 and a second assembly 1020 of the magnetic attachment apparatus 1000 are disposed next to each other on a same surface in a first direction, and a first magnet 1011 of the first assembly 1010 and a second assembly 1012 are stacked in a second direction. In an embodiment, the first assembly 1010 and the second assembly 1020 of the magnetic attachment apparatus 1000 may be disposed next to each other on an inner surface of a housing on an upper side of the charger 200 or a substrate inside the charger 200. In the charger 200, magnetic field strength radiated to an inside by the magnetic attachment apparatus 1000 is weakened, and magnetic field strength on an upper side of the magnetic attachment apparatus 1000 is enhanced.

FIG. 11(a) is a schematic diagram of a structure of another magnetic attachment apparatus according to an embodiment of this application. As shown in FIG. 11(a), a magnetic attachment apparatus 1100 includes a first assembly 1110 and a second assembly 1120. The first assembly 1110 and the second assembly 1120 are disposed on a same surface in a first direction. In other words, the first assembly 1110 and the second assembly 1120 are disposed on a same surface in a horizontal direction.

The first assembly 1110 includes a first magnet 1111, a second magnet 1112, and a filling material 1113, and the second assembly 1120 includes a third magnet 1120. The first magnet 1111, the second magnet 1112, and the filling material 1113 are stacked in a second direction. That is, the first magnet 1111 and the second magnet 1112 are stacked and perpendicular to a surface. The filling material 1113 is disposed between the first magnet 1111 and the second magnet 1112. Shapes of the first magnet 1111, the second magnet 1112, and the filling material 1113 are the same, and a shape of a top-view cross-section of each of the first magnet 1111, the second magnet 1112, and the filling material 1113 is a circular annulus. In an embodiment, the first magnet 1111, the second magnet 1112, and the filling material 1113 may be fixedly connected, to form an integrated structure. In another embodiment, the first magnet 1111, the second magnet 1112, and the filling material 1113 each may be fastened on a side surface of the third magnet 1120.

Compared with the magnetic attachment apparatus 1000 shown in FIG. 10(a), in the magnetic attachment apparatus 1100, the filling material 1113 is added, and is disposed between the first magnet 1111 and the second magnet 1112. The filling material 1113 may include one or more of a magnet, an isolating material, or a gap. In an embodiment, the filling material 713 may include a magnet. In an embodiment, the filling material 1113 may be a non-magnetic isolating material, and is filled in a gap between the first magnet 1111 and the second magnet 1112, to reduce volumes of the first magnet 1111 and the second magnet 1112, and reduce costs of a magnet material.

In another embodiment, the filling material 1113 may be a gap of a specific volume. In other words, when the first magnet 1111 and the second magnet 1112 are stacked in the second direction, an upper side surface of the first magnet 1111 and an upper side surface of the third magnet 1120 are on a plane, and a lower side surface of the second magnet 1112 and a lower side surface of the third magnet 1120 are on a plane. A gap with a preset volume is reserved between the first magnet 1111 and the second magnet 1112.

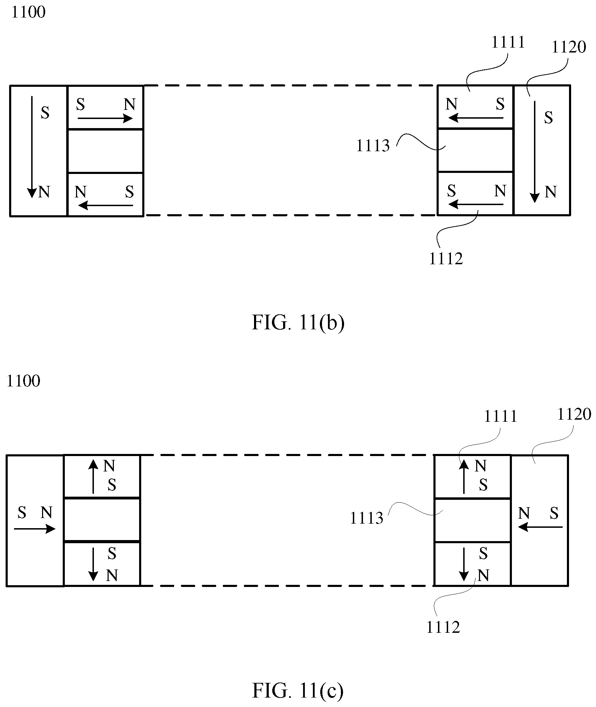

FIG. 11(b) is a schematic diagram of a magnetic field of a magnet of a magnetic attachment apparatus according to an embodiment of this application. As shown in FIG. 11(b), a magnetic attachment apparatus 1100 includes a first magnet 1111, a second magnet 1112, a filling material 1113, and a third magnet 1120. A magnetization pattern of each of the first magnet 1111 and the second magnet 1112 is radial magnetization. A magnetization pattern of the third magnet 1120 is axial magnetization. An N pole of the first magnet 1111 faces an inside of a circular annulus, and an S pole faces an outside of the circular annulus. An S pole of the second magnet 1112 faces an inside of a circular annulus, and an N pole faces an outside of the circular annulus. An S pole of the third magnet 1120 faces upward, and an N pole faces downward. A magnetic field direction of the first magnet 1111 and a magnetic field direction of the second magnet 1112 are parallel and opposite to each other. Magnetic fields radiated to an inside by the first magnet 1111 and the second magnet 1112 cancel each other out, so that a magnetic field radiated to an inside by the magnetic attachment apparatus 1100 is weakened. In an embodiment, the filling material 1113 may include an axially-magnetized magnet.

FIG. 11(c) is a schematic diagram of a magnetic field of a magnet of a magnetic attachment apparatus according to an embodiment of this application. As shown in FIG. 11(c), a magnetic attachment apparatus 1100 includes a first magnet 1111, a second magnet 1112, a filling material 1113, and a third magnet 1120. A magnetization pattern of each of the first magnet 1111 and the second magnet 1112 is axial magnetization. A magnetization pattern of the third magnet 1120 is radial magnetization. An S pole of the first magnet 1111 faces downward, and an N pole faces upward. An S pole of the second magnet 1112 faces upward, and an N pole faces downward. An N pole of the third magnet 1120 faces an inside of a circular annulus, and an S pole faces an outside of the circular annulus. A magnetic field direction of the first magnet 1111 and a magnetic field direction of the second magnet 1112 are parallel and opposite to each other. Magnetic fields radiated to an inside by the first magnet 1111 and the second magnet 1112 cancel each other out, so that a magnetic field radiated to an inside by the magnetic attachment apparatus 1100 is weakened. In an embodiment, the filling material 1113 may include a radially-magnetized magnet.

In this embodiment, a shape of a top-view cross-section of the magnetic attachment apparatus 1100 is a circle or a polygon, and a charging coil 20 of a charging module 10 may be disposed on an inside of a first assembly 1110 of the magnetic attachment apparatus 1100. The charging coil 20, the first assembly 1110, and a second assembly 1120 are sequentially arranged in a first direction.

In this embodiment, a magnetic field radiated to an inside by a middle part of a side surface of the third magnet 1120 is small. Therefore, no magnet is disposed in the middle part of the side surface of the third magnet 1120. Instead, only the first magnet 1111 is disposed on an upper part of the side surface of the third magnet 1120, and the second magnet 1112 is disposed on a lower part of the side surface of the third magnet 1120, to reduce the magnetic field radiated to an inside by the magnetic attachment apparatus 1100. Compared with the magnetic attachment apparatus 1000 shown in FIG. 10(a), when a same magnetic attraction force and a same lateral magnetic field are implemented, a quantity of used magnet materials is reduced, to reduce costs of an electronic device 100 and a charger 200.

The charging module provided in this embodiment of this application includes at least one magnetic attachment unit, and each magnetic attachment unit includes a first assembly and a second assembly. The first assembly includes a first magnet and a second magnet, and the first assembly includes at least one magnet. The first magnet and the second magnet in the first assembly are stacked in a second direction. The second assembly is disposed between the first magnet and the second magnet in the first assembly.

A magnetization pattern of each of the first magnet and the second magnet in the first assembly is one of axial magnetization and diametrical magnetization, and a magnetization pattern of at least one magnet in the second assembly is one of axial magnetization and diametrical magnetization. Alternatively, a magnetization pattern of each of the first magnet and the second magnet in the first assembly is one of axial magnetization and radial magnetization, and a magnetization pattern of at least one magnet in the second assembly is one of axial magnetization and radial magnetization. In addition, the magnetization pattern of each of the first magnet and the second magnet in the first assembly is different from the magnetization pattern of the at least one magnet in the second assembly.

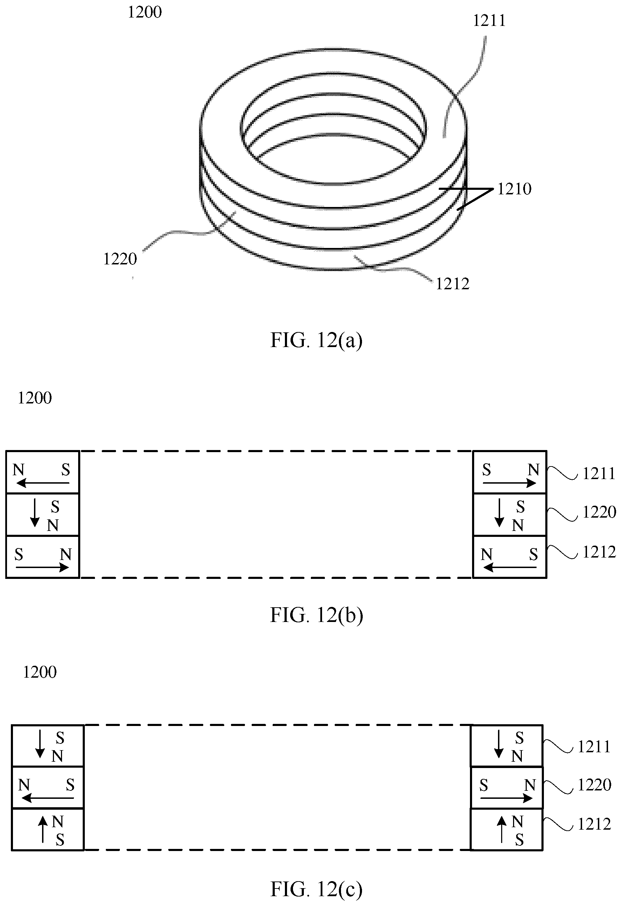

FIG. 12(a) is a schematic diagram of a structure of another magnetic attachment apparatus according to an embodiment of this application. As shown in FIG. 12(a), a magnetic attachment apparatus 1200 includes a first assembly 1210 and a second assembly 1220. The first assembly 1210 and the second assembly 1220 are stacked and perpendicular to a surface. Shapes of top-view cross-sections of the first assembly 1210 and the second assembly 1220 each are a circular annulus, and are the same. A magnetic field distribution of a magnet whose shape is a circular annulus is uniform, so that a magnetic field of the first assembly 1210 and a magnetic field of the second assembly 1220 enhance each other. In some embodiments, a shape of a top-view cross-section of the second assembly 1220 may be an ellipse, and a shape of a top-view cross-section of the first assembly 1210 may be an elliptical annulus. In some embodiments, a shape of a top-view cross-section of the second assembly 1220 may be a polygon such as a triangle or a quadrilateral or another irregular shape, and a shape of a top-view cross-section of the first assembly 1210 may be a multilateral annulus such as a triangular annulus or a quadrilateral annulus or another irregular annulus. In this embodiment of this application, based on internal space of an electronic device 100 or a charger 200, any one of the first assemblies 1210 and the second assemblies 1220 may be selected for the magnetic attachment apparatus 1200, to improve applicability of the magnetic attachment apparatus 1200.

The first assembly 1210 includes a first magnet 1211 and a second magnet 1212, and the second assembly 1220 includes a third magnet 1220. The first magnet 1211 and the second magnet 1212 are stacked and perpendicular to a surface. The third magnet 1220 is disposed between the first magnet 1211 and the second magnet 1212. A shape of the first magnet 1211 and a shape of the second magnet 1212 are the same, and a shape of a top-view cross-section of each of the first magnet 1211 and the second magnet 1212 is a circular annulus. In an embodiment, the first magnet 1211, the third magnet 1220, and the second magnet 1212 may be fixedly connected, to form an integral structure.

FIG. 12(b) is a schematic diagram of a magnetic field of a magnet of a magnetic attachment apparatus according to an embodiment of this application. As shown in FIG. 12(b), a magnetic attachment apparatus 1200 includes a first magnet 1211, a second magnet 1212, and a third magnet 1220. A magnetization pattern of each of the first magnet 1211 and the second magnet 1212 is radial magnetization. A magnetization pattern of the third magnet 1220 is axial magnetization. An S pole of the first magnet 1211 faces an inside of a circular annulus, and an N pole faces an outside of the circular annulus. An N pole of the second magnet 1212 faces an inside of a circular annulus, and an S pole faces an outside of the circular annulus. An S pole of the third magnet 1220 faces upward, and an N pole faces downward. A magnetic field direction of the first magnet 1211 and a magnetic field direction of the second magnet 1212 are parallel and opposite to each other. Magnetic fields radiated around by the first magnet 1211 and the second magnet 1212 cancel each other out, so that a magnetic field radiated around by the magnetic attachment apparatus 1200 is weakened.

FIG. 12(c) is a schematic diagram of a magnetic field of a magnet of a magnetic attachment apparatus according to an embodiment of this application. As shown in FIG. 12(c), a magnetic attachment apparatus 1200 includes a first magnet 1211, a second magnet 1212, and a third magnet 1220. A magnetization pattern of each of the first magnet 1211 and the second magnet 1212 is axial magnetization. A magnetization pattern of the third magnet 1220 is radial magnetization. An S pole of the first magnet 1211 faces upward, and an N pole faces downward. An N pole of the second magnet 1212 faces upward, and an S pole faces downward. An S pole of the third magnet 1220 faces an inside of a circular annulus, and an N pole faces an outside of the circular annulus. A magnetic field direction of the first magnet 1211 and a magnetic field direction of the second magnet 1212 are parallel and opposite to each other. Magnetic fields radiated around by the first magnet 1211 and the second magnet 1212 cancel each other out, so that a magnetic field radiated around by the magnetic attachment apparatus 1200 is weakened.

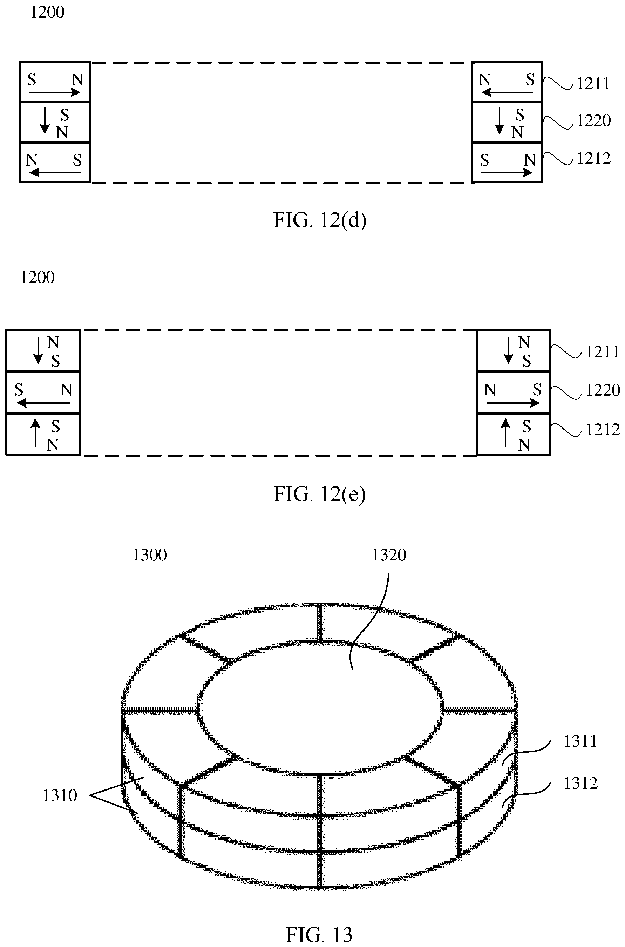

FIG. 12(d) is a schematic diagram of a magnetic field of a magnet of a magnetic attachment apparatus according to an embodiment of this application. As shown in FIG. 12(d), a magnetic attachment apparatus 1200 includes a first magnet 1211, a second magnet 1212, and a third magnet 1220. A magnetization pattern of each of the first magnet 1211 and the second magnet 1212 is radial magnetization. A magnetization pattern of the third magnet 1220 is axial magnetization. An N pole of the first magnet 1211 faces an inside of a circular annulus, and an S pole faces an outside of the circular annulus. An S pole of the second magnet 1212 faces an inside of a circular annulus, and an N pole faces an outside of the circular annulus. An S pole of the third magnet 1220 faces upward, and an N pole faces downward. A magnetic field direction of the first magnet 1211 and a magnetic field direction of the second magnet 1212 are parallel and opposite to each other. Magnetic fields radiated around by the first magnet 1211 and the second magnet 1212 cancel each other out, so that a magnetic field radiated around by the magnetic attachment apparatus 1200 is weakened.

FIG. 12(e) is a schematic diagram of a magnetic field of a magnet of a magnetic attachment apparatus according to an embodiment of this application. As shown in FIG. 12(e), a magnetic attachment apparatus 1200 includes a first magnet 1211, a second magnet 1212, and a third magnet 1220. A magnetization pattern of each of the first magnet 1211 and the second magnet 1212 is axial magnetization. A magnetization pattern of the third magnet 1220 is radial magnetization. An N pole of the first magnet 1211 faces upward, and an S pole faces downward. An S pole of the second magnet 1212 faces upward, and an N pole faces downward. An N pole of the third magnet 1220 faces an inside of a circular annulus, and an S pole faces an outside of the circular annulus. A magnetic field direction of the first magnet 1211 and a magnetic field direction of the second magnet 1212 are parallel and opposite to each other. Magnetic fields radiated around by the first magnet 1211 and the second magnet 1212 cancel each other out, so that a magnetic field radiated around by the magnetic attachment apparatus 1200 is weakened.

Internal magnetic field directions of the first magnet 1211, the second magnet 212, and the third magnet 1220 of the magnetic attachment apparatus 1200 are further combined in a plurality of manners, so that a magnetic field radiated around by the magnetic attachment apparatus 1200 can be weakened. This is not limited in this application.

In this embodiment of this application, a shape of a top-view cross-section of each of the first magnet 1211, the second magnet 212, and the third magnet 1220 in the magnetic attachment apparatus 1200 may alternatively be a polygon. As shown in FIG. 12(b), a magnetization pattern of each of the first magnet 1211 and the second magnet 1212 is axial magnetization. A magnetization pattern of the third magnet 1220 is radial magnetization. As shown in FIG. 12(c), a magnetization pattern of each of the first magnet 1211 and the second magnet 1212 is radial magnetization. A magnetization pattern of the third magnet 1220 is axial magnetization. As shown in FIG. 12(e), a magnetization pattern of each of the first magnet 1211 and the second magnet 1212 is axial magnetization. A magnetization pattern of the third magnet 1220 is diametrical magnetization. As shown in FIG. 12(d), a magnetization pattern of each of the first magnet 1211 and the second magnet 1212 is diametrical magnetization. A magnetization pattern of the third magnet 1220 is axial magnetization. A magnetic field direction of each of the first magnet 1211, the second magnet 212, and the third magnet 1220 whose shapes each are a polygon is the same as that in the foregoing embodiments. Details are not described again.

In this embodiment of this application, a shape of a top-view cross-section of each of the first magnet 1211, the second magnet 212, and the third magnet 1220 in the magnetic attachment apparatus 1200 may alternatively be an annular sector. As shown in FIG. 12(a), a magnetization pattern of each of the first magnet 1211 and the second magnet 1212 is radial magnetization. A magnetization pattern of the third magnet 1220 is axial magnetization. As shown in FIG. 12(b), a magnetization pattern of each of the first magnet 1211 and the second magnet 1212 is axial magnetization. A magnetization pattern of the third magnet 1220 is radial magnetization. As shown in FIG. 12(e), a magnetization pattern of each of the first magnet 1211 and the second magnet 1212 is axial magnetization. A magnetization pattern of the third magnet 1220 is diametrical magnetization. As shown in FIG. 12(d), a magnetization pattern of each of the first magnet 1211 and the second magnet 1212 is diametrical magnetization. A magnetization pattern of the third magnet 1220 is axial magnetization. A magnetic field direction of each of the first magnet 1211, the second magnet 212, and the third magnet 1220 that each are in a shape of an annular sector is the same as that in the foregoing embodiments. Details are not described again.

FIG. 13 is a schematic diagram of a structure of a magnet of a magnetic attachment apparatus according to an embodiment of this application. As shown in FIG. 13, a magnetic attachment apparatus 1300 includes a first assembly 1310 and a second assembly 1320, the first assembly 1310 includes a first magnet 1311 and a second magnet 1312, and the second assembly 1320 includes a third magnet 1320. The first magnet 1311 includes a plurality of magnet modules, the second magnet 1312 includes a plurality of magnet modules, and the third magnet 1320 includes only one cylindrical magnet module. A plurality of magnet modules are spliced to form an annular cylindrical structure. In this embodiment, a shape of a top-view cross-section of a plurality of magnet modules in each of the first magnet 1311 and the second magnet 1312 is an annular sector. The magnet module may be a sector magnet with an angle of 360°/M. M is a quantity of magnet modules that are spliced to form a magnet that is in a shape of a circular annulus, and is greater than or equal to 2. In some embodiments, the shape of the top-view cross-section of the magnet module may alternatively be a polygon such as a triangle or a quadrilateral. Based on internal space of an electronic device 100 or a charger 200, magnet modules in a plurality of shapes may be selected for the magnetic attachment apparatus 1300, to improve applicability of the magnetic attachment apparatus 1300. In this embodiment, a quantity of magnet modules in the first magnet 1311 is the same as or different from a quantity of magnet modules in the second magnet 1312.

In an embodiment, the first magnet 1311 includes only one cylindrical magnet module, the second magnet 1312 includes only one cylindrical magnet module, and the third magnet 1320 includes a plurality of magnet modules.

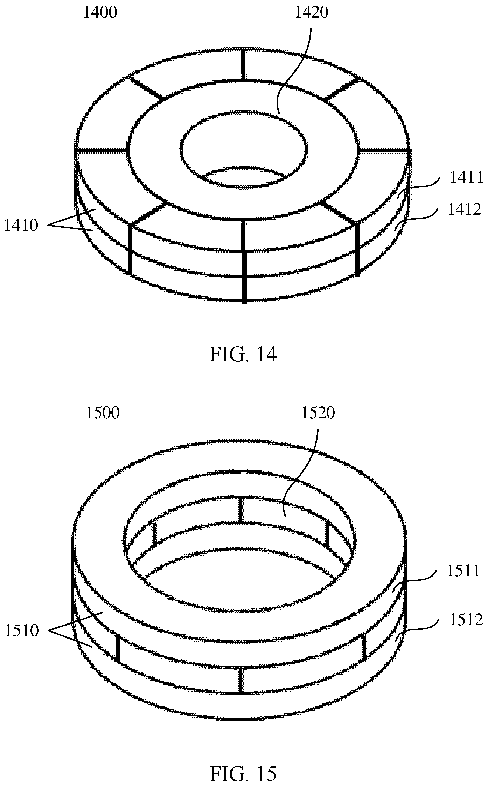

FIG. 14 is a schematic diagram of a structure of a magnet of a magnetic attachment apparatus according to an embodiment of this application. As shown in FIG. 14, a magnetic attachment apparatus 1400 includes a first assembly 1410 and a second assembly 1420. The first assembly 1410 includes a first magnet 1411 and a second magnet 1412. The second assembly 1420 includes a third magnet 1420. The first magnet 1411 includes a plurality of magnet modules, the second magnet 1412 includes a plurality of magnet modules, and the third magnet 1420 includes only one annular cylindrical magnet module. A plurality of magnet modules are spliced to form an annular cylindrical structure. In this embodiment, a shape of a top-view cross-section of a plurality of magnet modules in each of the first magnet 1411 and the second magnet 1412 is an annular sector. The magnet module may be a sector magnet with an angle of 360°/M. M is a quantity of magnet modules that are spliced to form a magnet that is in a shape of a circular annulus, and is greater than or equal to 2. In some embodiments, the shape of the top-view cross-section of the magnet module may alternatively be a polygon such as a triangle or a quadrilateral. Based on internal space of an electronic device 100 or a charger 200, magnet modules in a plurality of shapes may be selected for the magnetic attachment apparatus 1400, to improve applicability of the magnetic attachment apparatus 1400. In this embodiment, a quantity of magnet modules in the first magnet 1411 is the same as or different from a quantity of magnet modules in the second magnet 1412.

In an embodiment, the first magnet 1411 includes only one cylindrical magnet module, the second magnet 1412 includes only one cylindrical magnet module, and the third magnet 1420 includes a plurality of magnet modules.

FIG. 15 is a schematic diagram of a structure of a magnet of a magnetic attachment apparatus according to an embodiment of this application. As shown in FIG. 15, a magnetic attachment apparatus 1500 includes a first assembly 1510 and a second assembly 1520. The first assembly 1510 includes a first magnet 1511 and a second magnet 1512. The second assembly 1520 includes a third magnet 1520. The first magnet 1511 includes only one annular cylindrical magnet module. The second magnet 1512 includes only one annular cylindrical magnet module. The third magnet 1520 includes a plurality of magnet modules. A plurality of magnet modules are spliced to form an annular cylindrical structure. In this embodiment, a shape of a top-view cross-section of each of a plurality of magnet modules in the third magnet 1520 is an annular sector. The magnet module may be a sector magnet with an angle of 360°/M. M is a quantity of magnet modules that are spliced to form a magnet that is in a shape of a circular annulus, and is greater than or equal to 2. In some embodiments, the shape of the top-view cross-section of the magnet module may alternatively be a polygon such as a triangle or a quadrilateral. Based on internal space of an electronic device 100 or a charger 200, magnet modules in a plurality of shapes may be selected for the magnetic attachment apparatus 1500, to improve applicability of the magnetic attachment apparatus 1500.

In an embodiment, the first magnet 1511 includes a plurality of magnet modules. The second magnet 1512 includes a plurality of magnet modules. The third magnet 1520 includes only one annular cylindrical magnet module. In this embodiment, a quantity of magnet modules in the first magnet 1511 is the same as or different from a quantity of magnet modules in the second magnet 1512.

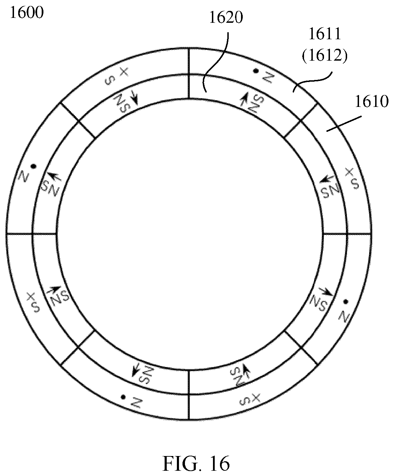

FIG. 16 is a schematic diagram of a magnetic field of a magnet of another magnetic attachment apparatus according to an embodiment of this application. As shown in FIG. 16, a magnetic attachment apparatus 1600 includes a first assembly 1610 and a second assembly 1620, and the first assembly 1610 includes a first magnet 1611 and a second magnet 1612. The second magnet 1612 is covered by the first magnet 1611. The second assembly 1620 includes a third magnet 1620. The first magnet 1611, the second magnet 1612, and the third magnet 1620 each include a plurality of magnet modules. The plurality of magnet modules are spliced to form an annular structure. Magnetization patterns of a plurality of magnet modules in the first magnet 1611 are the same. Magnetization patterns of a plurality of magnet modules in the second magnet 1612 are the same. Magnetization patterns of a plurality of magnet modules in the third magnet 1620 are the same. That is, magnetization patterns of a plurality of magnet modules in a same magnet are the same.

As shown in FIG. 16, internal magnetic field directions of two adjacent magnet modules in the first magnet 1611 are opposite. Internal magnetic field directions of two adjacent magnet modules in the second magnet 1612 are opposite. Internal magnetic field directions of two adjacent magnet modules in the third magnet 1620 are opposite. For example, an N pole of one of the two adjacent magnet modules in the first magnet 1611 faces upward, and an S pole faces downward. An S pole of the other one of the two adjacent magnet modules in the first magnet 1611 faces upward, and an N pole faces downward. That is, internal magnetic field directions of two adjacent magnet modules in a plurality of magnet modules in a same magnet are opposite, to reduce a repulsion force between the magnet modules in a process of assembling the magnetic attachment apparatus 1600, and facilitate assembly of the magnetic attachment apparatus 1600.

In another embodiment, a plurality of magnet modules in a same magnet may be divided into at least two sides, and internal magnetic field directions of a plurality of magnet modules on one side in the plurality of magnet modules on two sides are opposite to internal magnetic field directions of a plurality of magnet modules on the other one side. For example, M magnet modules in a same magnet are divided into two sides, one side includes M1 magnet modules, and the other side includes M2 magnet modules. M is a positive integer greater than or equal to 2, and M=M1+M2. S poles of the M1 magnet modules on one side face upward, and N poles face downward. S poles of the M2 magnet modules on the other side face downward, and N poles face upward. That is, internal magnetic field directions of a plurality of magnet modules on one side in a plurality of magnet modules on two adjacent sides in a same magnet are opposite to internal magnetic field directions of a plurality of magnet modules on the other side, to reduce a repulsion force between the magnet modules in a process of assembling the magnetic attachment apparatus, and facilitate assembly of the magnetic attachment apparatus.

One or more magnets in the first assembly or the second assembly of the magnetic attachment apparatus in the charging module provided in this embodiment of this application each may include one or more magnet modules. A shape of a top-view cross-section of the magnet module is an annular sector or a polygon.

In an embodiment, one or more magnets in the first assembly or the second assembly each may include a plurality of magnet modules, and a plurality of magnet modules in a same magnet have a same magnetization pattern.

In an embodiment, one or more magnets in the first assembly or the second assembly each may include a plurality of magnet modules, and internal magnetic field directions of two adjacent magnets in a same magnet are opposite.

In an embodiment, one or more magnets in the first assembly or the second assembly each may include a plurality of magnet modules, a plurality of magnet modules in a same magnet are divided into at least two sides, and internal magnetic field directions of the magnet that are on adjacent sides are opposite.

A location relationship, a quantity, a magnetization pattern, a shape of a top-view cross-section, an internal magnetic field direction, a structure, and the like of the magnet in the magnetic attachment apparatus of the charging module provided in embodiments of this application are not limited to the foregoing embodiments, and any technical solution implemented based on a principle of this application falls within the protection scope of this solution. Any one or more embodiments or figures in this specification combined in a proper manner shall fall within the protection scope of this solution.

Finally, it is noted that the foregoing embodiments are merely used to describe the technical solutions of this application. A person of ordinary skill in the art should understand that, although this application is described in detail with reference to the foregoing embodiments, the technical solutions described in the foregoing embodiments may still be modified, or some technical features thereof may be equivalently replaced. Such modifications or replacements do not make the essence of the corresponding technical solutions depart from the scope of the technical solutions of embodiments of this application.

## Claims

1. A charging module, comprising a charging coil and a magnetic attachment apparatus, wherein the charging coil is configured to receive or send electric energy, and the magnetic attachment apparatus is disposed on an inside or an outside of the charging coil, wherein
the magnetic attachment apparatus comprises at least one magnetic attachment unit, the magnetic attachment unit comprises a first assembly and a second assembly, and the first assembly and the second assembly are disposed next to each other in a first direction;
the first assembly comprises a plurality of magnets, the plurality of magnets in the first assembly are stacked in a second direction, and internal magnetic field directions of at least two magnets in the first assembly are opposite;
the second assembly comprises at least one magnet, and internal magnetic field directions of magnets in the second assembly are the same; and
the first direction is parallel to a plane of the charging coil or the magnetic attachment apparatus, and the second direction is perpendicular to the plane of the charging coil or the magnetic attachment apparatus.

2. The charging module according to claim 1, wherein the charging coil, the first assembly of the magnetic attachment unit, and the second assembly of the magnetic attachment unit are sequentially arranged next to each other in the first direction.

3. The charging module according to claim 1 or 2, wherein
the internal magnetic field directions of the at least two magnets in the first assembly are parallel to one of the first direction and the second direction, and the internal magnetic field direction of the magnet in the second assembly is parallel to the other one of the first direction and the second direction.

4. The charging module according to any one of claims 1 to 3, wherein magnetization patterns of the at least two magnets in the first assembly are different from a magnetization pattern of the magnet in the second assembly.

5. The charging module according to any one of claims 1 to 4, wherein the at least two magnets in the first assembly comprise a first magnet and a second magnet, a magnetization pattern of the first magnet is the same as a magnetization pattern of the second magnet, and an internal magnetic field direction of the first magnet is opposite to an internal magnetic field direction of the second magnet.

6. The charging module according to any one of claims 1 to 5, wherein the first assembly further comprises a filling material, the filling material and the at least two magnets in the first assembly are stacked in the second direction, the filling material is disposed between the at least two magnets in the first assembly, and the filling material comprises one or more of an isolating assembly or a magnet.

7. The charging module according to any one of claims 1 to 6, wherein one or more magnets in one or more of the first assembly or the second assembly are formed by splicing a plurality of magnet submodules disposed next to each other.

8. The charging module according to any one of claims 1 to 7, wherein a shape of a top-view cross-section of the magnet in the first assembly is an annular sector or a polygon, and a shape of a top-view cross-section of the magnet in the second assembly is an annular sector or a polygon; and
the magnetization patterns of the at least two magnets in the first assembly are one of axial magnetization and radial magnetization, and the magnetization pattern of the magnet in the second assembly is the other one of axial magnetization and radial magnetization; or
the magnetization patterns of the at least two magnets in the first assembly are one of axial magnetization and diametrical magnetization, and the magnetization pattern of the magnet in the second assembly is the other one of axial magnetization and diametrical magnetization.

9. The charging module according to any one of claims 1 to 8, wherein the magnetic attachment apparatus comprises a plurality of magnetic attachment units, a shape of a top-view cross-section of each magnetic attachment unit is an annular sector or a polygon, and the plurality of magnetic attachment units are sequentially disposed next to each other at a neighboring location of the charging coil, to form an annulus or an annular sector.

10. The charging module according to any one of claims 1 to 8, wherein the magnetic attachment apparatus comprises a plurality of magnetic attachment units, a shape of a top-view cross-section of each magnetic attachment unit is an annular sector or a polygon, and each magnetic attachment unit is separately disposed at a neighboring location of the charging coil.

11. The charging module according to any one of claims 1 to 8, wherein the magnetic attachment apparatus comprises a plurality of groups of magnetic attachment units, each group of magnetic attachment units comprises one magnetic attachment unit or a plurality of magnetic attachment units sequentially arranged next to each other, and each group of magnetic attachment units is separately disposed at a neighboring location of the charging coil.

12. The charging module according to any one of claims 1 to 7, wherein the magnetic attachment apparatus comprises one magnetic attachment unit, and a shape of a top-view cross-section of the magnetic attachment unit is a circle, an annulus, or a polygon.

13. The charging module according to any one of claims 1 to 7 or 12, wherein a shape of a top-view cross-section of the magnet in the first assembly is an annulus or an annular sector, a shape of a top-view cross-section of the magnet in the second assembly is an annulus, a circle, or a polygon, the magnetization patterns of the at least two magnets in the first assembly are one of axial magnetization and radial magnetization, and the magnetization pattern of the magnet in the second assembly is the other one of axial magnetization and radial magnetization.

14. An electronic device, comprising a power module and the charging module according to any one of claims 1 to 10, wherein
a charging coil of the charging module is electrically connected to the power module, and the charging coil of the charging module is configured to receive electric energy sent by a charging coil of a charger; and
a magnetic attachment apparatus is configured to limit a location of contact between the electronic device and the charger, so that the charging coil of the charger matches a charging coil of the electronic device.

15. A charger, comprising a power module and the charging module according to any one of claims 1 to 10, wherein
a charging coil of the charging module is electrically connected to the power module, and the charging coil of the charging module is configured to send electric energy to a charging coil of an electronic device; and
a magnetic attachment apparatus is configured to limit a location of contact between the charger and the electronic device, so that the charging coil of the charger matches the charging coil of the electronic device.
